# EUROPEAN PATENT SPECIFICATION

(11) **EP 4 375 914 B1**
(45) Date of publication and mention of the grant of the patent: **25.03.2026**
(21) Application number: 22887159.6
(22) Date of filing: 28.10.2022
(51) Int. Cl.: G06Q 50/02, E21C 35/00, G06N 20/00, G07C 5/00

(54) **MINE MANAGEMENT SYSTEM**
MINENVERWALTUNGSSYSTEM
SYSTÈME DE GESTION DE MINES

(30) Priority: 29.10.2021 JP 2021178037
(43) Date of publication of application: 29.05.2024
(73) Proprietor: Hitachi Construction Machinery Co., Ltd., Tokyo 110-0015 (JP)
(72) Inventor: IIHOSHI, Yoichi, Tokyo 100-8280 (JP); TSUKUI, Hiroshi, Tokyo 110-0015 (JP); EJIRI, Kouichirou, Tokyo 110-0015 (JP); AJIMA, Kenichi, Tsuchiura-shi, Ibaraki 300-0013 (JP); MIZUTANI, Kenji, Tokyo 110-0015 (JP)
(74) Representative: Manitz Finsterwald Patent- und Rechtsanwaltspartnerschaft mbB
(86) International application number: PCT/JP2022/040298
(87) International publication number: WO 2023/074834

(56) References cited:
- JP-A- 2013 041 448
- JP-A- 2013 105 278
- JP-A- 2017 045 215
- US-A1- 2017 185 906
- US-A1- 2019 292 908

## Description

### Technical Field

The present invention relates to a mine management system for managing the productivity of a mine.

### Background Art

There has been known a system for collecting and analyzing working data of mining machines, such as hydraulic excavators or dump trucks. Patent Literature 1 discloses a system for computing various management indicators based on working conditions of mining machines. The system of Patent Literature 1 computes indicators related to the productivity of the mining machines, such as fuel consumption rates or load transportation rates per unit time, in particular zones on routes of a mine. Patent Literature 2 discloses a system for assigning dump trucks based on time information and positional information on a particular route. The system of Patent Literature 2 outputs assignment commands for the dump trucks based on a wait time occurring on the particular route and the positional information.

### Citation List

### Patent Literature

Patent Literature 1: WO 2015/029229
Patent Literature 2: Japanese Patent No. 5809710

### Technical Problem

However, although the system of Patent Literature 1 detects an increase in the fuel consumption rates and a decrease in the load transportation rates per unit time for a particular route, effects and the like of a route length and a slope on the fuel consumption rates have not been sufficiently considered. In addition, the system of Patent Literature 2 assigns the dump trucks to improve productivity based on the wait time occurring on a route and the positional information. However, the route is limited, and sufficient consideration has not been given to response to unknown routes and other factors (such as road surface conditions and operation conditions of excavator or dump truck operators) that cause the productivity to fall out of a plan (a state where the productivity declines from scheduled or expected productivity). The systems of Patent Literature 1 and Patent Literature 2 are difficult to apply to mines having a plurality of routes or unknown routes. Furthermore, with the systems of Patent Literature 1 and Patent Literature 2, it is difficult to accurately detect that productivity falls out of a plan in connection with a plurality of factors, and it is difficult to appropriately present information for improving the productivity to fall within the plan to each concerned party.

US 2019/0292908 A1 discloses a method for improving an oil and gas drilling process in which sensor data are evaluated for equipment characteristics. With respect to historical data, performance indicators are computed.

### Summary of Invention

An object of the present invention is to provide a mine management system that can accurately detect that productivity falls out of a plan in connection with a plurality of factors in various mines, as defined by the appended claims.

### Solution to Problem

The above object is accomplished with the features of claim 1. A mine management system has the features of claim 1. It is for managing productivity of a mine, and includes a server device that accumulates and processes working data of a mining machine collected from the mining machine; and a determination device that performs determination processing of determining whether or not a working condition of the mining machine in which the productivity falls out of a plan has occurred, based on the working data. The server device includes: an extracting section that extracts cycle data as the working data for each work cycle of the mining machine, from the accumulated working data; a computing section that computes a plurality of indicators representing an occurrence factor of the working condition in which the productivity falls out of a plan, in the cycle data; and a learning section that uses the plurality of computed indicators to perform machine learning of allowing the determination device to learn a relationship between the plurality of indicators that identify the cycle data in which the productivity falls within a plan. The determination device performs the determination processing based on the relationship between the plurality of indicators learned by the learning section. Claim 1 recites further features.

### Advantageous Effects of Invention

According to the present invention, a mine management system that can accurately detect that productivity falls out of a plan in connection with a plurality of factors in various mines can be provided.

Problems, configurations, and effects other than ones described above will be clarified in the following explanation of embodiments.

### Brief Description of Drawings

Fig. 1 is a drawing schematically illustrating a configuration of a mine management system of Embodiment 1.
Fig. 2 is a drawing describing a work cycle and out-of-plan factor indicators of a dump truck.
Fig. 3 is a block diagram illustrating a machine learning function of a processing device illustrated in Fig. 1.
Fig. 4 is a drawing illustrating an example of a cluster classification result by a learning section illustrated in Fig. 3.
Fig. 5 is a drawing illustrating an example of cluster centers in respective clusters with ID = 0 and ID = 2 illustrated in Fig. 4.
Fig. 6 is a flowchart of processing performed by the processing device illustrated in Fig. 3 during machine learning.
Fig. 7 is a block diagram illustrating functions of a determination device illustrated in Fig. 1.
Fig. 8 is a flowchart of determination processing performed by the determination device illustrated in Fig. 7.
Fig. 9 is a block diagram illustrating a visualization function of the processing device illustrated in Fig. 1.
Fig. 10 is a drawing illustrating a result of totaling a score for a predetermined period for each dump truck.
Fig. 11 is a drawing illustrating a result of totaling a score for the same period as in Fig. 10 for each date.
Fig. 12 is a drawing illustrating a result of totaling the frequency of appearance of occurrence factors of an out-of-plan working condition.
Fig. 13 is a drawing illustrating a result of totaling the number of appearances of the occurrence factors illustrated in Fig. 12 for each date.
Fig. 14 is a chart of working data in which a waiting time falls out of a plan.
Fig. 15 is a chart of working data in which a queuing load time falls out of a plan.
Fig. 16 is a chart of working data in which a queuing dump time falls out of a plan.
Fig. 17 is a chart of working data in which a loading time falls out of a plan.
Fig. 18 is a chart of working data in which a change over time falls out of a plan.
Fig. 19 is a chart of working data in which a payload falls out of a plan.
Fig. 20 is a drawing illustrating another display example of the working data in which the queuing dump time falls out of a plan.
Fig. 21 is a drawing illustrating a result of totaling the frequency of occurrence of the out-of-plan working condition for each dump truck.
Fig. 22 is a drawing illustrating a result of totaling the frequency of occurrence of the out-of-plan working condition illustrated in Fig. 21 for each date.
Fig. 23 is a drawing illustrating a result of totaling the frequency of occurrence of the out-of-plan working condition illustrated in Fig. 21 for each route.
Fig. 24 is a drawing describing a work cycle and out-of-plan factor indicators of a hydraulic excavator that applies to a mine management system of Embodiment 2.

### Description of Embodiments

The following describes embodiments of the present invention by referring to the drawings. Note that unless otherwise mentioned, a configuration to which the same reference numeral is given in respective embodiments has a similar function in the respective embodiments, and the description is omitted.

### [Embodiment 1]

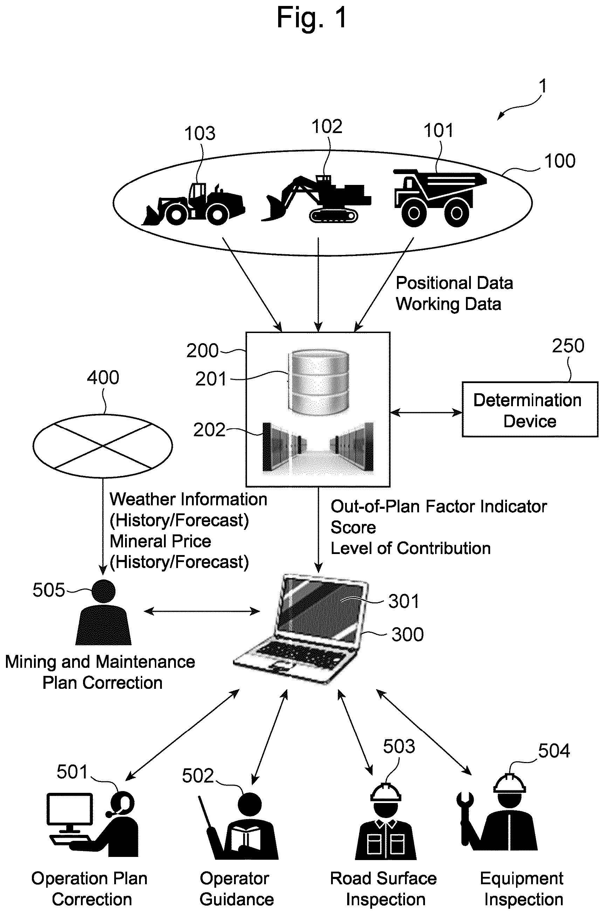

Using Fig.1 to Fig. 23, a mine management system 1 of Embodiment 1 will be described.

Fig. 1 is a drawing schematically illustrating the configuration of the mine management system 1 of Embodiment 1.

The mine management system 1 is a system for centrally managing overall productivity (such as a load transportation rate per unit time) of a mine 100. The mine management system 1 includes a plurality of mining machines 101 to 103, a server device 200, a determination device 250, and a terminal device 300.

The mining machines 101 to 103 are working machines that conduct mining work in the mine 100. The mining machines 101 to 103 can include, for example, a hydraulic excavator 102 that loads excavated earth, sand, and the like onto a dump truck 101, the dump truck 101 that transports a load, and a bulldozer 103 that bulldozes a road surface. The mining machines of the mine management system 1 are not limited thereto.

The server device 200 manages the mining machines 101 to 103. The server device 200 accumulates and processes working data of the mining machines 101 to 103 collected from the mining machines 101 to 103.

The server device 200 includes a recording device 201 and a processing device 202.

The recording device 201 is constituted of a database that records the working data and positional data collected from the mining machines 101 to 103. The working data is collected from each of the plurality of mining machines 101 to 103 over a predetermined period and accumulated in the recording device 201. The processing device 202 is configured to include a processor and a memory. The processing device 202 realizes functions of the processing device 202 by executing programs stored in the memory by the processor.

Here, it is desirable that the working data of the mining machines 101 to 103 are sequentially transmitted to the server device 200. However, considering the communication environment and communication cost, the working data is not necessarily transmitted sequentially. The server device 200 of this embodiment starts processing after some large amount of working data is accumulated. Some large amount may be determined, for example, by the time taken in the longest-ever work cycle of the dump truck 101, or by the data amount of the working data transmitted in the longest-ever work cycle.

The determination device 250 performs determination processing of determining whether or not a working condition of the mining machines 101 to 103 in which the productivity of the mine 100 falls out of a plan has occurred based on the working data accumulated in the recording device 201 of the server device 200. Productivity falling out of a plan indicates a state in which productivity declines from productivity planned in advance. Productivity falling within a plan indicates a state in which the productivity planned in advance is obtained. The determination device 250 transmits a determination result to the processing device 202 of the server device 200. The determination device 250 is configured to include a processor and a memory. The determination device 250 realizes functions of the determination device 250 by executing programs stored in the memory by the processor.

The determination device 250 may be configured as a part of the processing device 202 of the server device 200, may be configured as a part of a control device of the mining machines 101 to 103, or may be configured as a part of the terminal device 300. When the determination device 250 is configured as a part of the control device of the mining machines 101 to 103, the determination device 250 can notify operators of the mining machines 101 to 103 of the determination result without communication delay. Further, in this case, the determination device 250 can transmit the determination result in real time to the processing device 202 and cause the terminal device 300 to display the determination result without delay.

The terminal device 300 displays information, such as a processing result of the server device 200 and the determination result of the determination device 250 on a display 301. The terminal device 300 is configured by a smartphone, tablet PC, notebook PC, or the like that communicates with the server device 200. The terminal device 300 can display the information to be displayed on the display 301 in a dashboard format. The terminal device 300 may display the information to be displayed on the display 301 in a report format or a mail format.

The terminal device 300 is used by users of the mine management system 1. The users of the mine management system 1 include, for example, an operation planner 501 who creates an operation plan for the mining machines 101 to 103 according to a mining and maintenance plan of the mine 100, operators of the mining machines 101 to 103, a guidance instructor 502 of the operators, a road maintenance worker 503 who maintains and inspects the road surfaces of the routes and the like of the mine 100, an equipment maintenance worker 504 who maintains and inspects the mining machines 101 to 103 or various equipment, and a mining manager 505 who creates the mining and maintenance plan of the mine 100. The terminal device 300 may be possessed by each of these users.

Based on the information displayed on the terminal device 300, the users of the terminal device 300 can appropriately grasp that the productivity of the mine 100 falls out of a plan and take appropriate measures to improve the productivity to fall within the plan, thereby improving the productivity of the mine 100. For example, the operation planner 501 of the mine 100 can use the information displayed on the terminal device 300 to correct the operation plan of the mining machines 101 to 103. The guidance instructor 502 of the operators can use the information displayed on the terminal device 300 to discover an operator who should improve operation and provide guidance of the operation. The road maintenance worker 503 can use the information displayed on the terminal device 300 to promptly identify a road surface that has become a factor that causes the productivity to fall out of a plan and repair the road surface. The equipment maintenance worker 504 can use the information displayed on the terminal device 300 to promptly identify an equipment failure that has become a factor that causes the productivity to fall out of a plan, repair the failure, and place a replacement part order in advance. The mining manager 505 can combine the information displayed on the terminal device 300 with weather information (including historical, current, and forecast information) and mineral price information (including historical, current, and forecast information) acquired via an Internet 400 to re-examine the mining and maintenance plan. The mining manager 505 can correct the mining and maintenance plan and issue an improvement instruction to the operation planner 501, the guidance instructor 502, the road maintenance worker 503, or the equipment maintenance worker 504.

The following describes the mine management system 1 that detects that the productivity of the mine 100 falls out of a plan from the working data of the dump truck 101, which is one of the mining machines 101 to 103, as an example.

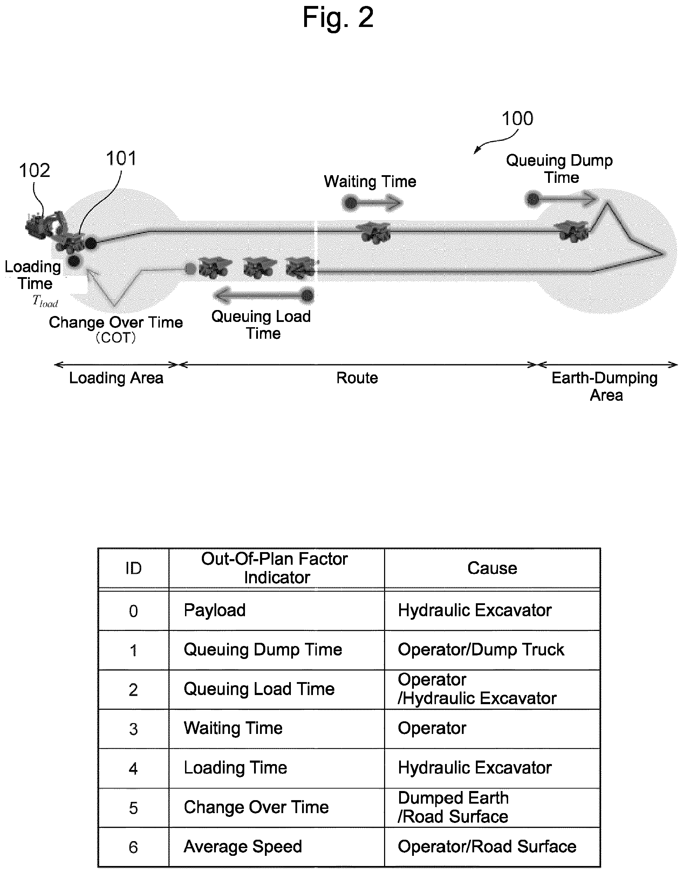

Fig. 2 is a drawing describing a work cycle and out-of-plan factor indicators of the dump truck 101.

The mine 100 has a loading area where the hydraulic excavator 102 loads excavated earth, sand, and the like as a load onto the dump truck 101, an earth-dumping area where the dump truck 101 dumps the earth, sand, and the like as a load, and a plurality of routes that connect between the loading area and the earth-dumping area. The dump truck 101 performs a series of actions in one work cycle of performing earth-dumping in the earth-dumping area, moving from the earth-dumping area through a route to the loading area, and after loading in the loading area, moving through a route to the earth-dumping area.

In one work cycle of the dump truck 101, items that affect the productivity of the mine 100 include a payload of the dump truck 101, a queuing dump time as a wait time (queuing time) of the dump truck 101 in the earth-dumping area, a queuing load time as a wait time (queuing time) of the dump truck 101 in the loading area, a waiting time of the dump truck 101 on a route, a loading time of a load to the dump truck 101 by the hydraulic excavator 102, a change over time (COT) as a time required for the dump truck 101 to transition to ready for loading in the loading area, and an average speed of the dump truck 101. These items can be factors that cause the working condition of the dump truck 101 in which the productivity of the mine 100 falls out of a plan. In this embodiment, as illustrated in the table of Fig. 2, these items are defined as indicators that represent occurrence factors of the working condition of the dump truck 101 in which the productivity falls out of a plan (hereinafter also referred to as "out-of-plan factor indicators").

As illustrated in the table of Fig. 2, the out-of-plan factor indicators of the dump truck 101 are preliminarily associated with IDs that identify the respective indicators and information on entities that affect fluctuations of the respective indicators (that is, causes of the fluctuations of the respective indicators). The determination device 250 uses the out-of-plan factor indicators to evaluate the working data of the dump truck 101 and identify an occurrence factor of the working condition of the dump truck 101 in which the productivity falls out of a plan. The processing device 202 can assign a concerned party of the entity associated with the out-of-plan factor indicator representing the occurrence factor identified by the determination device 250 to a person in charge of measures to improve the productivity to fall within the plan. The processing device 202 transmits a message, such as an improvement instruction to the person in charge of measures, to the terminal device 300 of the person in charge of measures. The terminal device 300 can display the message on the display 301 to notify the person in charge.

Note that it is only necessary for the mine management system 1 to employ at least two of the indicators illustrated in the table of Fig. 2 as the out-of-plan factor indicators of the dump truck 101. In this embodiment, a description is given of the mine management system 1 as one that employs all the indicators illustrated in the table of Fig. 2.

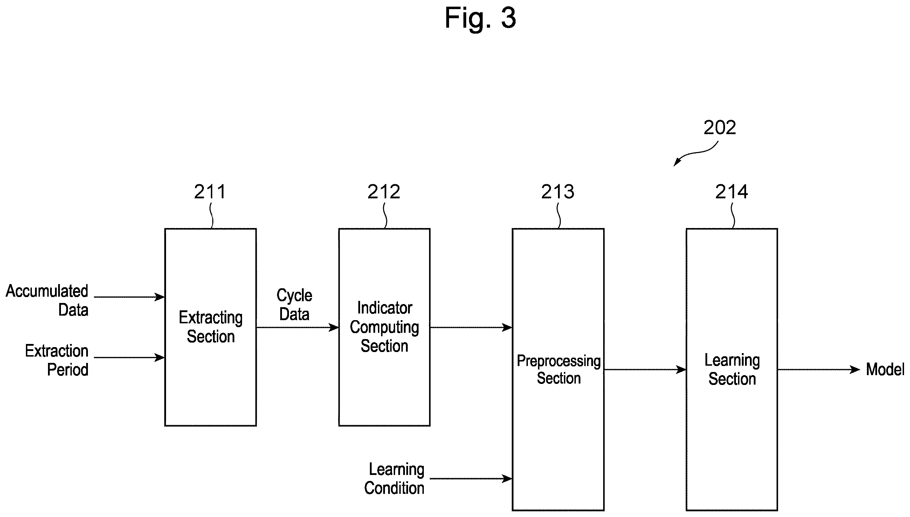

Fig. 3 is a block diagram illustrating a machine learning function of the processing device 202 illustrated in Fig. 1.

Some of the functions of the determination device 250 are realized as a model built by machine learning. In the mine management system 1, the processing device 202 of the server device 200 builds the model that realizes some of the functions of the determination device 250 by machine learning.

The processing device 202 has an extracting section 211, an indicator computing section 212, a preprocessing section 213, and a learning section 214.

The extracting section 211 extracts cycle data, which are the working data for each work cycle of the dump truck 101, from the working data accumulated in the recording device 201 (hereinafter also referred to as "accumulated data"). Specifically, the extracting section 211 identifies work cycles by transition of the payload of the dump truck 101 and extracts cycle data. Cycle data includes the working data of the dump truck 101 that has traveled a plurality of routes during one work cycle. The extracting section 211 gives a cycle ID as identification information to the extracted cycle data. The extracting section 211 associates the cycle data with a vehicle ID as the identification information of the dump truck 101 and cycle start time and end time and registers it in the recording device 201. The extracting section 211 need not extract cycle data from all the working data accumulated in the recording device 201 and can extract cycle data from the working data collected or recorded during a preset extraction period.

The indicator computing section 212 computes the out-of-plan factor indicators in the extracted cycle data. Specifically, the indicator computing section 212 can compute the payload based on a suspension pressure of the dump truck 101. The indicator computing section 212 can detect whether the dump truck 101 is positioned in the loading area, in the earth-dumping area, or on a route from positional data acquired by a GPS sensor of the dump truck 101. The indicator computing section 212 can compute a wait time based on a fact that a vehicle speed or engine speed of the dump truck 101 becomes smaller than a predetermined value. Based on this wait time and the positional data, the indicator computing section 212 can compute the queuing dump time, the queuing load time, and the waiting time. The indicator computing section 212 can compute the loading time by computing a time from when the payload starts to increase to when the increase of the payload ends. The indicator computing section 212 can compute the change over time by computing a time from when the dump truck 101 enters the loading area to when loading starts. The indicator computing section 212 can compute the average speed from a travel time and a travel distance excluding a state in which the dump truck 101 stops.

Thus, the indicator computing section 212 computes indicators representing actions or states that easily affect the productivity of the mine 100, which are distinctive actions or states in work areas or during work processes of the dump truck 101, as the out-of-plan factor indicators of the dump truck 101. This allows the mine management system 1 to accurately detect in which work area or during which work process an action or state causes the working condition of the dump truck 101 in which the productivity falls out of a plan to have occurred. Since the mine management system 1 can take appropriate measures to improve the productivity to fall within the plan, the productivity of the mine 100 can be improved.

The preprocessing section 213 excludes cycle data that are not appropriate as learning data from the cycle data extracted by the extracting section 211 based on conditions of the work cycles to be excluded from machine learning or conditions of the out-of-plan factor indicators to be excluded from machine learning (learning conditions). The conditions of the work cycles to be excluded from machine learning include, for example, the work cycle having an extremely short travel distance on the routes, or the work cycle in which the previous earth-dumping position differs greatly from the current earth-dumping position. This allows the learning section 214 to perform machine learning by excluding the cycle data of the work cycles that do not affect the productivity very much, such as infrequent route travel and carrying of earth, sand, and the like for bulldozing road surfaces.

When cycle data are extracted from the actual working data in which the productivity falls within a plan, most of the cycle data may be considered appropriate as the learning data. However, in order to improve a determination accuracy of the determination device 250, the preprocessing section 213 can set upper and lower limit values of the out-of-plan factor indicators as the conditions of the out-of-plan factor indicators to be excluded from machine learning and exclude the out-of-plan factor indicators that are outside a range of the upper and lower limit values. This allows the learning section 214 to perform machine learning only with the out-of-plan factor indicators within the range of the upper and lower limit values that identify cycle data in which the productivity falls within the plan. Therefore, the mine management system 1 can improve the determination accuracy of the determination device 250.

The learning section 214 performs machine learning of allowing the determination device 250 to learn a relationship between a plurality of out-of-plan factor indicators that identify the cycle data in which the productivity falls within a plan. The learning section 214 of this embodiment performs the machine learning by clustering a plurality of cycle data in which the productivity falls within a plan. This allows the learning section 214 of this embodiment to build a classification model that has learned the relationship between the plurality of out-of-plan factor indicators that identify the cycle data in which the productivity falls within a plan. While the learning section 214 of this embodiment uses k-means, which is one of clustering methods, other clustering methods may be used.

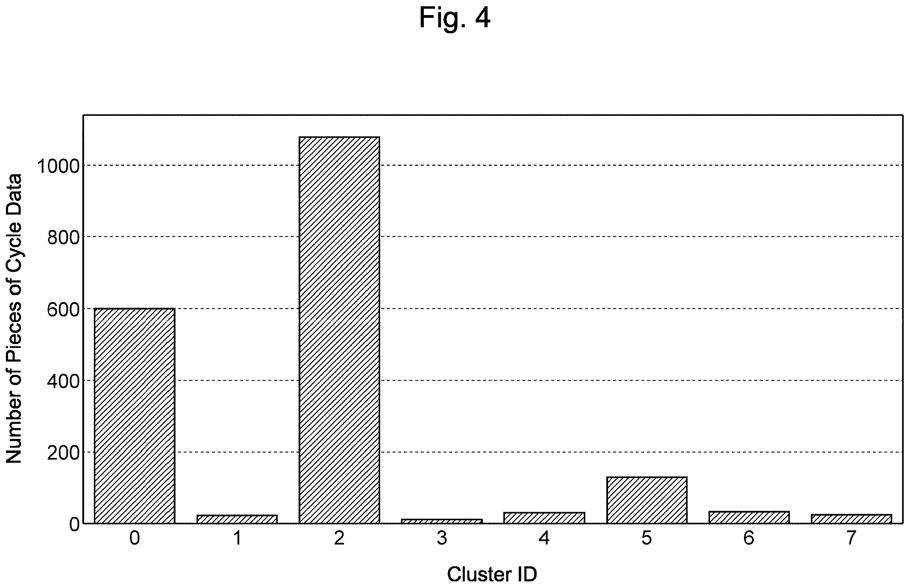

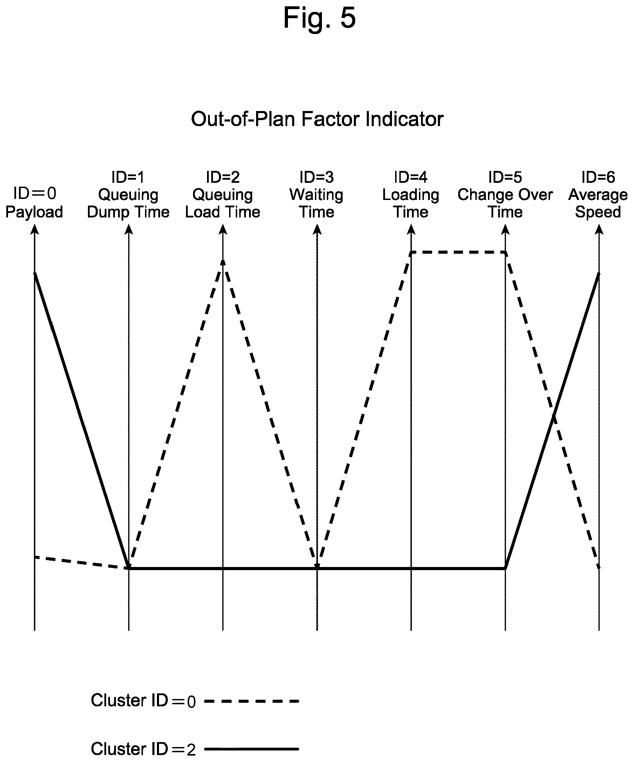

Fig. 4 is a drawing illustrating an example of a cluster classification result by the learning section 214 illustrated in Fig. 3. The vertical axis in Fig. 4 indicates the number of cycle data, and the horizontal axis in Fig. 4 indicates cluster IDs that are the identification information of clusters. Fig. 5 is a drawing illustrating an example of cluster centers in respective clusters with ID = 0 and ID = 2 illustrated in Fig. 4. The dashed line illustrated in Fig. 5 indicates a relationship between a plurality of out-of-plan factor indicators (ID = 0 to 6) in the cycle data belonging to the cluster with ID = 0. Intersection points of the dashed line and the vertical axes illustrated in Fig. 5 indicate the cluster centers in the cluster with ID = 0. The solid line illustrated in Fig. 5 indicates a relationship between the plurality of out-of-plan factor indicators (ID = 0 to 6) in the cycle data belonging to the cluster with ID = 2. Intersection points of the solid line and the vertical axes illustrated in Fig. 5 indicate the cluster centers in the cluster with ID = 2.

The k-means is unsupervised learning that automatically classifies the respective cycle data into only a count of the number of clusters specified in advance, using a plurality of out-of-plan factor indicators in the respective cycle data as feature amounts. In the example of Fig. 4, the number of clusters of eight is specified. As illustrated in Fig. 4, most of the cycle data are classified into the cluster with ID = 0 and the cluster with ID = 2. With the k-means, the relationship between the plurality of out-of-plan factor indicators that identify the cycle data in which the productivity falls within the plan is learned as the respective cluster centers illustrated in Fig. 5. With the k-means, distances (for example, the Euclidean distance or the Mahalanobis distance) from the respective cluster centers (eight in this example) of the cycle data are computed, and the cycle data are classified to the cluster with the smallest computed distance. In addition, the determination device 250 uses a score computed according to the distance between target cycle data and the cluster center of the cluster to which the cycle data is classified to evaluate how much the target cycle data deviates from the cycle data in which the productivity falls within the plan. Furthermore, the determination device 250 identifies an out-of-plan factor indicator having a level of contribution to the score that is the largest of those of the plurality of out-of-plan factor indicators as an occurrence factor of the working condition in which the productivity falls out of the plan. This allows the processing device 202 to assign a concerned party of the entity associated with the out-of-plan factor indicator representing the identified occurrence factor to a person in charge of measures to improve the productivity to fall within the plan. The processing device 202 can transmit a message, such as an improvement instruction to the person in charge of measures, to the terminal device 300 and display the message on the display 301. The mine management system 1 can improve the productivity of the mine 100.

That is, the mine management system 1 can accurately detect that the productivity falls out of a plan in connection with a plurality of factors by performing machine learning of the relationship between the plurality of out-of-plan factor indicators instead of handling the out-of-plan factor indicators alone. Moreover, since the mine management system 1 determines whether or not the working condition in which the productivity falls out of a plan has occurred by quantitatively evaluating the cycle data using a unified evaluation value called a score, the mine management system 1 can accurately detect that the productivity falls out of a plan in various mine that have a plurality of routes or unknown routes.

The cluster centers in the respective clusters with ID = 0 and ID = 2 illustrated in Fig. 5 represent the relationship between representative out-of-plan factor indicators of the cycle data in which the productivity falls within a plan. As illustrated by the dashed line in Fig. 5, the cycle data belonging to the cluster with ID = 0 tend to have a slow average speed. When the routes connecting between the earth-dumping area and the loading area are relatively short, there are few opportunities for the dump truck 101 to travel at a top speed. Therefore, a tendency in which the average speed is slow is likely to appear. In addition, when the routes are relatively short, a tendency in which the payload is small and the queuing load time, the change over time, and the like are long is likely to appear. As illustrated by the solid line in Fig. 5, the cycle data belonging to the cluster with ID = 2 tend to have a fast average speed. When the routes connecting between the earth-dumping area and the loading area are relatively long, there are many opportunities for the dump truck 101 to travel at a top speed. Therefore, a tendency in which the average speed is fast is likely to appear. In addition, when the routes are relatively long, a tendency in which the payload is large and the queuing load time, the change over time, and the like are short is likely to appear. That is, when the routes are relatively short, a tendency such as those for the cycle data belonging to the cluster with **ID** = 0 is likely to appear. When the routes are relatively long, a tendency such as those for the cycle data belonging to the cluster with **ID** = 2 is likely to appear.

Thus, by clustering a plurality of cycle data in which the productivity falls within a plan, the learning section 214 can build a classification model that has learned the relationship between the plurality of out-of-plan factor indicators that identify the cycle data in which the productivity falls within the plan. The determination device 250 can use the classification model to compute a score represented according to the distance from the cluster center and evaluate how much to deviate from the cycle data in which the productivity falls within the plan. In particular, the learning section 214 builds a classification model that has learned the relationship between the out-of-plan factor indicators in the cycle data of the dump truck 101 that has traveled a plurality of routes, thereby allowing the mine management system 1 to accurately detect that the productivity falls out of a plan in various mines.

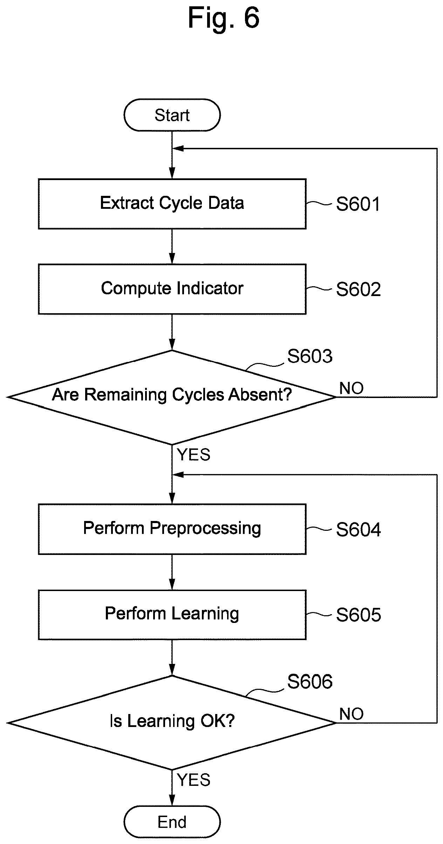

Fig. 6 is a flowchart of processing performed by the processing device 202 illustrated in Fig. 3 during machine learning.

In Step S601, the processing device 202 extracts cycle data from the accumulated data accumulated in the recording device 201.

In Step S602, the processing device 202 computes the out-of-plan factor indicators of the extracted cycle data.

In Step S603, the processing device 202 determines whether or not unextracted cycle data remain in the accumulated data. When the unextracted cycle data remain, the processing device 202 moves to Step S601. When the unextracted cycle data do not remain, the processing device 202 moves to Step S604.

In Step S604, the processing device 202 performs preprocessing of excluding cycle data that are not appropriate as learning data from the extracted cycle data.

In Step S605, the processing device 202 clusters the plurality of preprocessed cycle data and allows the determination device 250 to learn the relationship between the plurality of out-of-plan factor indicators that identify cycle data in which the productivity falls within a plan. That is, the processing device 202 builds a classification model of the cycle data that has learned the relationship between the plurality of out-of-plan factor indicators as described above.

In Step S606, the processing device 202 computes the cluster centers and the scores and determines whether or not the cycle data that are not appropriate as the learning data have been learned. The processing device 202 makes the determination of Step S606 by determining whether or not the score computed for each cluster is smaller than a preset value. Alternatively, the processing device 202 may display a graph illustrating the relationship of the cluster centers as illustrated in Fig. 5 on the terminal device 300 and allow a user to make the determination of Step S606. As the determination of Step S606, when the cycle data that are not appropriate as the learning data have been learned (NO), the processing device 202 moves to Step S604. As the determination of Step S606, when the cycle data that are not appropriate as the learning data have not been learned, in other words, when the cycle data that are appropriate as the learning data have been learned (YES), the processing device 202 ends this processing illustrated in Fig. 6.

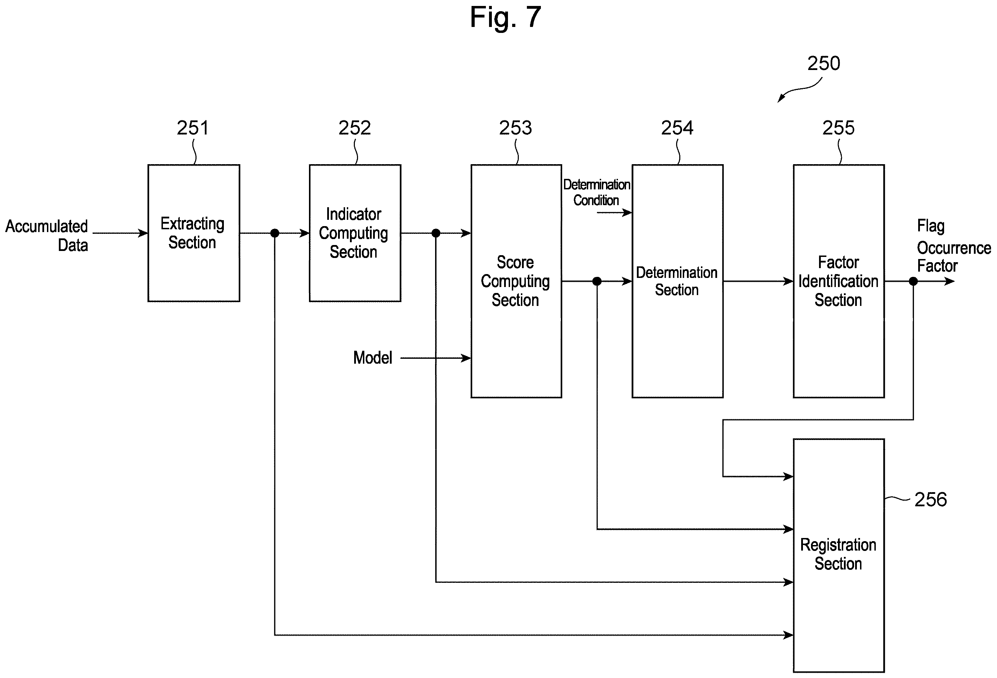

Fig. 7 is a block diagram illustrating functions of the determination device 250 illustrated in Fig. 1.

As described above, based on the preliminarily learned relationship between the plurality of out-of-plan factor indicators that identify the cycle data in which the productivity falls within a plan, the determination device 250 evaluates how much cycle data extracted from the accumulated data accumulated in the recording device 201 deviates from the cycle data in which the productivity falls within the plan. This causes the determination device 250 to perform determination processing of determining whether or not the working condition of the dump truck 101 in which the productivity falls out of the plan has occurred.

The determination device 250 has an extracting section 251, an indicator computing section 252, a score computing section 253, a determination section 254, a factor identification section 255, and a registration section 256.

Similarly to the extracting section 211 of the processing device 202, the extracting section 251 extracts cycle data from the accumulated data accumulated in the recording device 201. Similarly to the indicator computing section 212 of the processing device 202, the indicator computing section 252 computes the out-of-plan factor indicators in the cycle data extracted by the extracting section 251.

The score computing section 253 uses the classification model built by the learning section 214 of the processing device 202 to compute distances between the cycle data extracted by the extracting section 251 and the respective cluster centers of the classification model. The score computing section 253 computes a value with the smallest distance as a score. The larger score of the extracted cycle data represents that the extracted cycle data significantly deviates from the cycle data in which the productivity falls within a plan.

The determination section 254 determines whether or not the score computed by the score computing section 253 is larger than a predetermined threshold. When the score computed by the score computing section 253 is larger than the predetermined threshold, the determination section 254 determines that the working condition of the dump truck 101 in which the productivity falls out of a plan has occurred. When the score computed by the score computing section 253 is equal to or less than the predetermined threshold, the determination section 254 determines that the working condition of the dump truck 101 in which the productivity falls out of a plan has not occurred. When the determination section 254 determines that the working condition of the dump truck 101 in which the productivity falls out of a plan has occurred, the determination section 254 generates a flag indicating the fact.

The factor identification section 255 identifies an occurrence factor of the working condition of the dump truck 101 in which the productivity falls out of a plan. The factor identification section 255 computes a level of contribution of each of the plurality of out-of-plan factor indicators to the score and identifies the out-of-plan factor indicator having the largest level of contribution as the occurrence factor of the out-of-plan working condition. That is, the factor identification section 255 can identify the main occurrence factor of the out-of-plan working condition by identifying the out-of-plan factor indicator that has the greatest impact when the score is computed.

The registration section 256 associates information, such as the cycle **ID** of cycle data, the cycle start time and end time, the out-of-plan factor indicators, the score, the flag, and the occurrence factor, with one another and registers the information in the recording device 201. The registration section 256 preferably further associates these information with the vehicle ID of the dump truck 101 and route IDs as identification information of the routes that the dump truck 101 travels and registers the information in the recording device 201. The routes that the dump truck 101 travels can be detected from the positional data acquired by the GPS sensor of the dump truck 101 or can be detected by receiving an operation command of the dump truck 101.

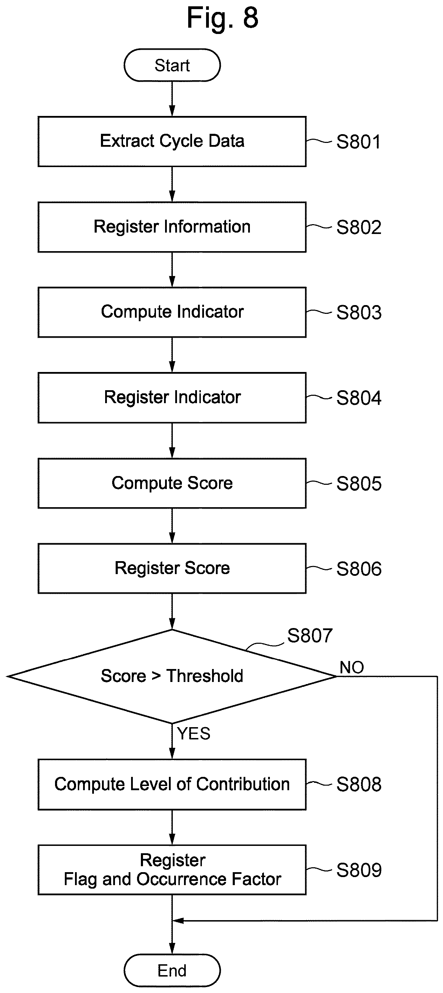

Fig. 8 is a flowchart of determination processing performed by the determination device 250 illustrated in Fig. 7.

In Step S801, the determination device 250 extracts cycle data from the accumulated data accumulated in the recording device 201.

In Step S802, the determination device 250 associates the cycle ID of the extracted cycle data with the cycle start time and end time and registers them in the recording device 201. At this time, the determination device 250 preferably associates these information with the vehicle ID of the dump truck 101 and the route IDs of the routes that the dump truck 101 travels and registers the information.

In Step S803, the determination device 250 computes the out-of-plan factor indicators of the extracted cycle data.

In Step S804, the determination device 250 associates the computed out-of-plan factor indicators with the cycle ID and registers them in the recording device 201.

**In** Step S805, the determination device 250 computes the score of the extracted cycle data using the classification model.

**In** Step S806, the determination device 250 associates the computed score with the cycle **ID** and registers it in the recording device 201.

**In** Step S807, the determination device 250 determines whether or not the computed score is larger than the threshold. When the computed score is equal to or less than the threshold, the determination device 250 ends this processing illustrated in Fig. 8. When the computed score is larger than the threshold, the determination device 250 generates a flag indicating that an out-of-plan working condition has occurred and moves to Step S808.

**In** Step S808, the determination device 250 computes a level of contribution of each of the plurality of out-of-plan factor indicators to the computed score. The determination device 250 identifies the out-of-plan factor indicator having the largest level of contribution as the occurrence factor of the out-of-plan working condition.

**In** Step S809, the determination device 250 associates the flag indicating that the out-of-plan working condition has occurred and the occurrence factor of the out-of-plan working condition with the cycle **ID** and registers them in the recording device 201. Then, the determination device 250 ends this processing illustrated in Fig. 8.

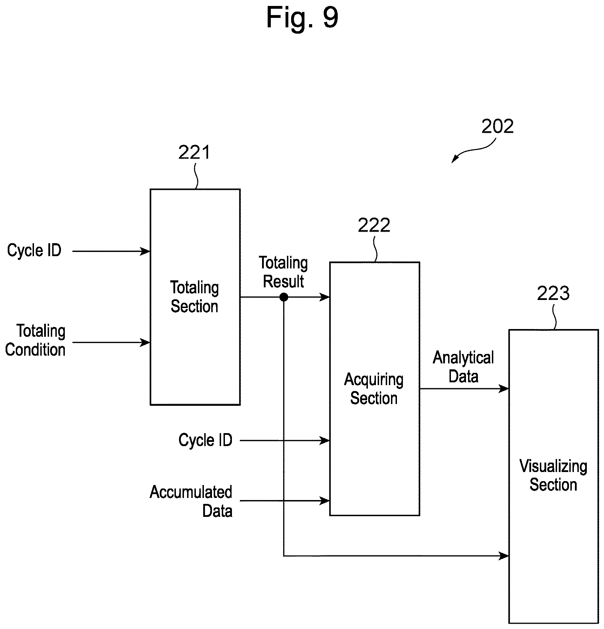

Fig. 9 is a block diagram illustrating a visualization function of the processing device 202 illustrated in Fig. 1.

The processing device 202 uses the information registered in the recording device 201 by the determination device 250 to total and visualize information on the working condition of the dump truck 101 in which the productivity falls out of a plan.

The processing device 202 has a totaling section 221, an acquiring section 222, and a visualizing section 223.

The totaling section 221 uses the information registered in the recording device 201 by the determination device 250 to total the frequency of occurrence of the out-of-plan working condition, the frequency of appearance of the occurrence factors, or the scores based on totaling conditions, such as for each period, for each dump truck 101, or for each route. For example, the totaling section 221 can total the number of flags or occurrence factors associated with the cycle IDs recorded in the recording device 201 over a predetermined period and total the frequency of occurrence of the out-of-plan working condition or the frequency of appearance of the occurrence factors. The totaling section 221 can total the scores associated with the cycle IDs recorded in the recording device 201 for each vehicle ID.

The acquiring section 222 acquires the working data of the dump truck 101 in which the out-of-plan working condition has occurred from the accumulated data accumulated in the recording device 201 as analytical data to analyze in detail the occurrence factors of the out-of-plan working condition. For example, the acquiring section 222 can acquire the working data (one or a plurality of cycle data) of the dump truck 101 in which the out-of-plan working condition has occurred based on the flags associated with the cycle IDs recorded in the recording device 201.

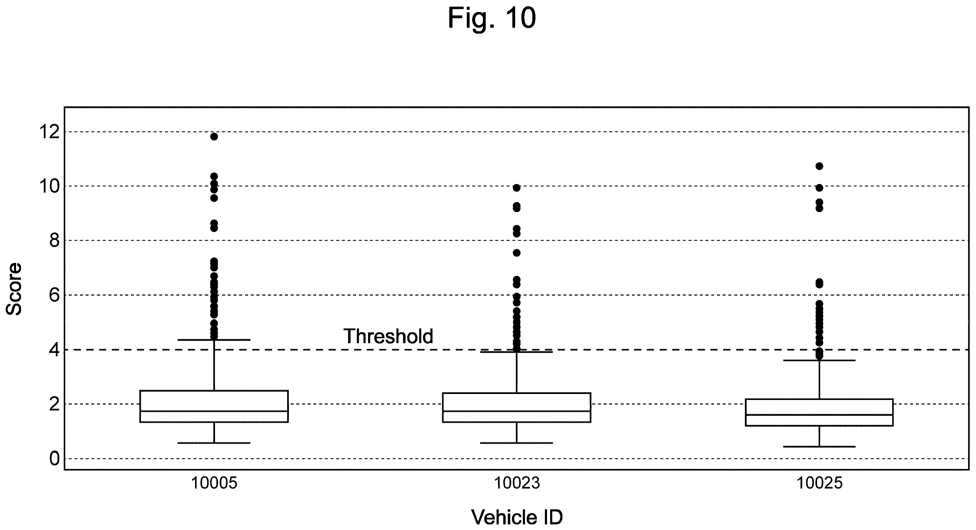

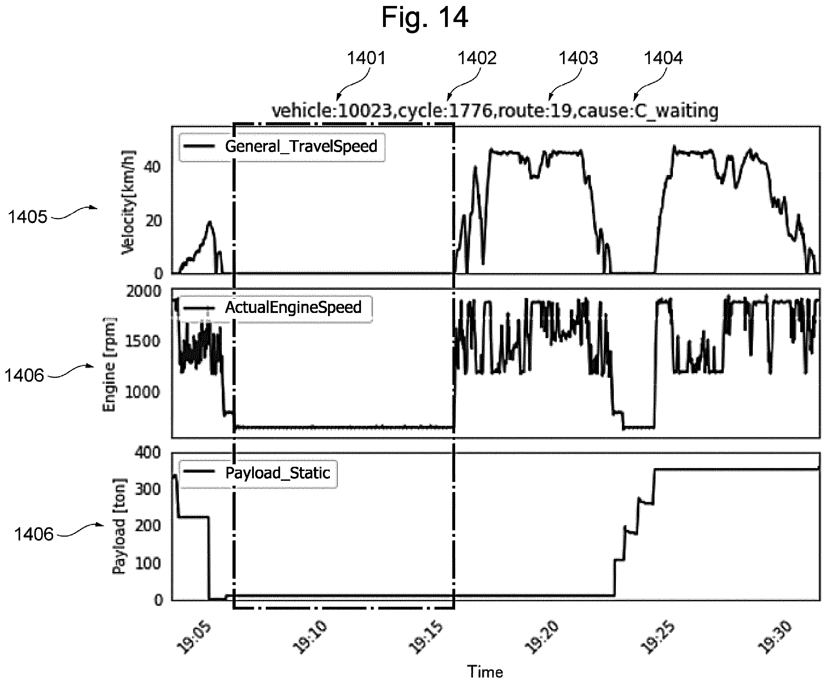

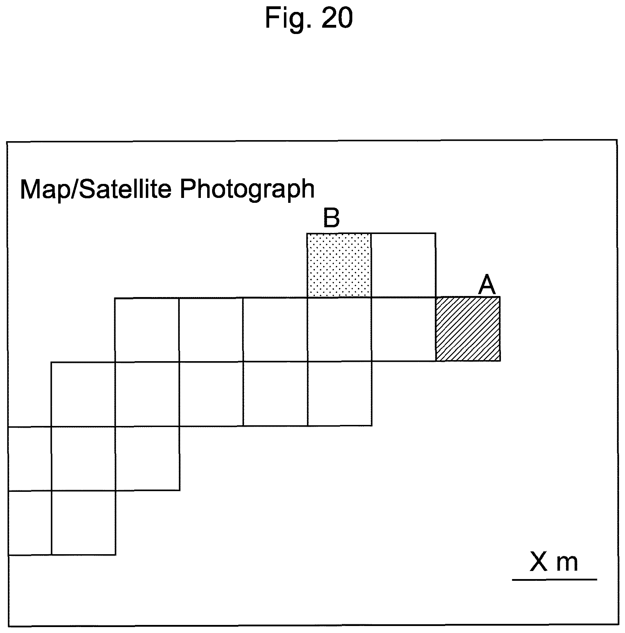

The visualizing section 223 visualizes a totaled result of the totaling section 221 or the analytical data acquired by the acquiring section 222. For example, the visualizing section 223 creates a graph illustrating the totaled result of the totaling section 221 as illustrated in Fig. 10 to Fig. 13 or Fig. 21 to Fig. 23 described below and transmits the graph to the terminal device 300. In addition, the visualizing section 223 creates a chart illustrating the transition of the working data acquired as the analytical data as illustrated in Fig. 14 to Fig. 19 described below and transmits the chart to the terminal device 300. The visualizing section 223 creates a map of the work areas identified from the working data acquired as the analytical data as illustrated in Fig. 20 described below and transmits the map to the terminal device 300. The terminal device 300 can display the graph and the like created by the visualizing section 223 on the display 301.

The processing device 202 can not only visualize the totaled result of the totaling section 221 or the analytical data acquired by the acquiring section 222, but also analyze the totaled result or the analytical data and transmit necessary information to the terminal device 300. For example, the processing device 202 can transmit, to the terminal device 300 of each of the concerned parties of the entities associated with the out-of-plan factor indicator representing the occurrence factor of the out-of-plan working condition, a message, such as an improvement instruction corresponding to the occurrence factor. The terminal device 300 can display the message on the display 301 to notify each of the concerned parties.

In addition, the visualizing section 223 may be included in the terminal device 300 instead of being included in the processing device 202. That is, the processing device 202 may transmit the totaled result of the totaling section 221 or the analytical data acquired by the acquiring section 222 to the terminal device 300, and the terminal device 300 may visualize the totaled result or the analytical data.

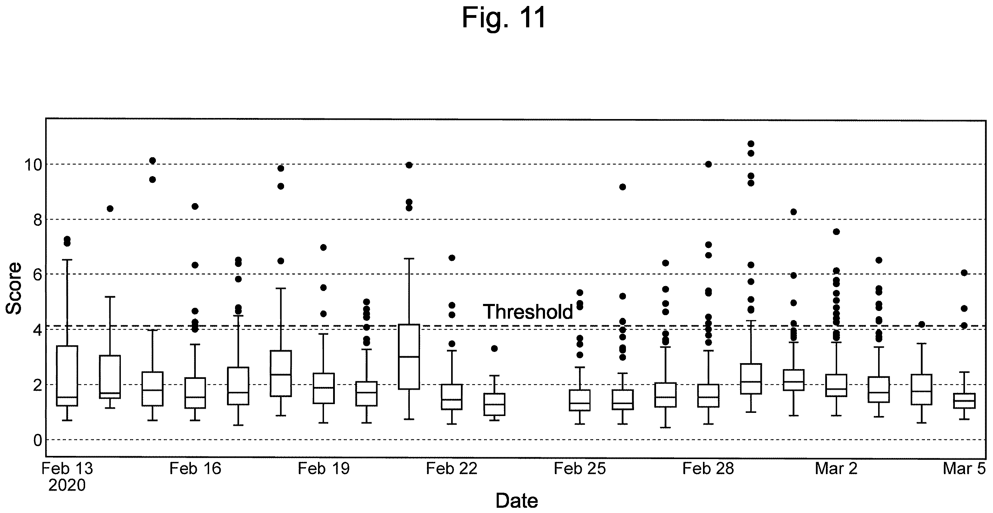

Fig. 10 is a drawing illustrating the result of totaling the score for a predetermined period for each dump truck 101. Fig. 11 is a drawing illustrating the result of totaling the score for the same period as in Fig. 10 for each date.

The user of the terminal device 300 that displays Fig. 10 can judge whether or not the working condition in which the productivity falls out of a plan has occurred depending on an individual difference of the dump truck 101. In the example of Fig. 10, there is no difference in the median and interquartile range of a box-and-whisker plot according to the dump truck 101. In the example of Fig. 10, it can be judged that the occurrence of the out-of-plan working condition does not depend on the individual difference of the dump truck 101. If the occurrence of the out-of-plan working condition depends on the individual difference of the dump truck 101, the terminal device 300 can display a message of the fact on the display 301 to notify the equipment maintenance worker 504. This allows the mine management system 1 to improve the productivity.

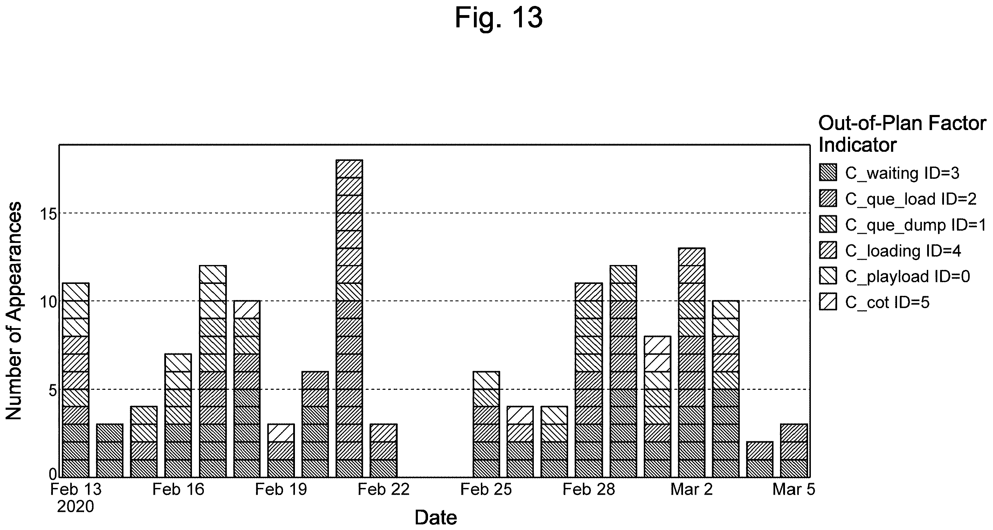

In the example of Fig. 11, the score fluctuates from day to day, and the occurrence of the out-of-plan working condition depends on items related to date (such as weather, road surfaces, and operation commands). In this case, the terminal device 300 can display the occurrence factors described below using Fig. 13 on the display 301 to notify the road maintenance worker 503 or the operation planner 501. The road maintenance worker 503 or the operation planner 501 can analyze the occurrence factors in detail and take necessary measures. This allows the mine management system 1 to improve the productivity. Note that by associating the identification information of operators of the dump truck 101 with the cycle ID, the processing device 202 can total the score for each operator. The terminal device 300 can display a message indicating to the guidance instructor 502 of a specific operator having a high score that the score is high on the display 301 to notify the guidance instructor 502. The guidance instructor 502 can provide guidance to the specific operator having a high score to lower the score. This allows the mine management system 1 to improve the productivity.

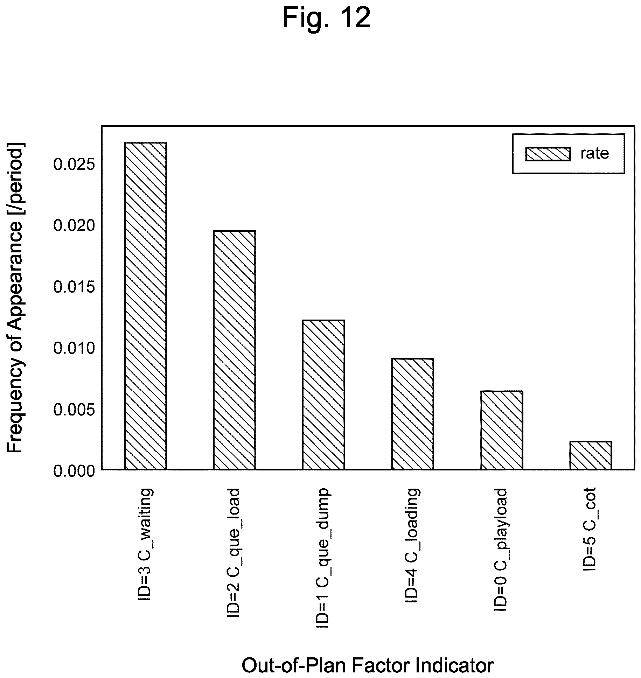

Fig. 12 is a drawing illustrating the result of totaling the frequency of appearance of the occurrence factors of the out-of-plan working condition. Fig. 13 is a drawing illustrating the result of totaling the number of appearances of the occurrence factors illustrated in Fig. 12 for each date.

Fig. 12 illustrates the occurrence factors of the out-of-plan working condition arranged in descending order of the frequency of appearance. The user of the terminal device 300 that displays Fig. 12 can easily grasp the occurrence factors of the out-of-plan working condition and the frequency of appearance of the occurrence factors. **In** Fig. 12, the occurrence factor with a high frequency of appearance is the waiting time of the dump truck 101 on the routes. The terminal device 300 can display a message indicating that the waiting time falls out of a plan on the display 301 to notify the mining manager 505. The mining manager 505 can issue an improvement instruction to the operation planner 501. Alternatively, when the processing device 202 transmits, to the terminal device 300 of each of the concerned parties of the entities associated with the out-of-plan factor indicator representing the occurrence factor, a message, such as an improvement instruction corresponding to the occurrence factor, the terminal device 300 of each of the concerned parties can display the message on the display 301 to notify each of the concerned parties. The format of the notification is not limited to a message, and for example, the notification may be displayed in an area chart. In this case, daily work cycles of the mining machines 101 to 103 are indicated in chronological order and classified according to preset work areas using different colors. Then, when the out-of-plan working condition occurs, an area chart can be displayed by associating with the out-of-plan factor indicator representing the occurrence factor of the out-of-plan working condition. This allows the mine management system 1 to improve the productivity.

In the example of Fig. 13, an event in which the waiting time of the dump truck 101 on the routes fall out of a plan occurs almost every day. Comparing Fig. 13 with Fig. 11, it can be seen that the occurrence factors that are large in the number of appearances on a date in which the median and interquartile range of the box-and-whisker plot illustrated in Fig. 11 are large (for example, Feb. 21) are the queuing load time and the payload.

As described above, in the recording device 201, information of a place where the out-of-plan working condition has occurred (route ID) and time information (cycle start time and end time) are recorded. Therefore, the user can further analyze in detail the occurrence factors of the out-of-plan working condition by referring to the working data of the dump truck 101 at the time when the out-of-plan working condition has occurred.

Fig. 14 to Fig. 19 illustrate charts of the working data of the dump truck 101 on which the out-of-plan working condition has occurred. In Fig. 14 to Fig. 19, reference numerals 1401 to 1403 denote the vehicle ID, the cycle ID, and the route ID, respectively. A reference numeral 1404 denotes the out-of-plan factor indicator representing the occurrence factor of the out-of-plan working condition. A reference numeral 1405 denotes a chart illustrating the transition of the vehicle speed of the dump truck 101. A reference numeral 1406 denotes a chart illustrating the transition of the engine speed of the dump truck 101. A reference numeral 1407 denotes a chart illustrating the transition of the payload of the dump truck 101.

Fig. 14 is a chart of the working data in which the waiting time falls out of a plan.

In the example of Fig. 14, as illustrated by the dash-dotted line, it can be seen that the dump truck 101 travels on a route a little after earth-dumping (around time 19:07) and then stops for about 10 minutes. It is only necessary for the user of the terminal device 300 that displays Fig. 14 to analyze the operation command at this time, the position of the bulldozer 103 on the route, the presence or absence of an alert on the dump truck 101, and the like from the accumulated data in the recording device 201.

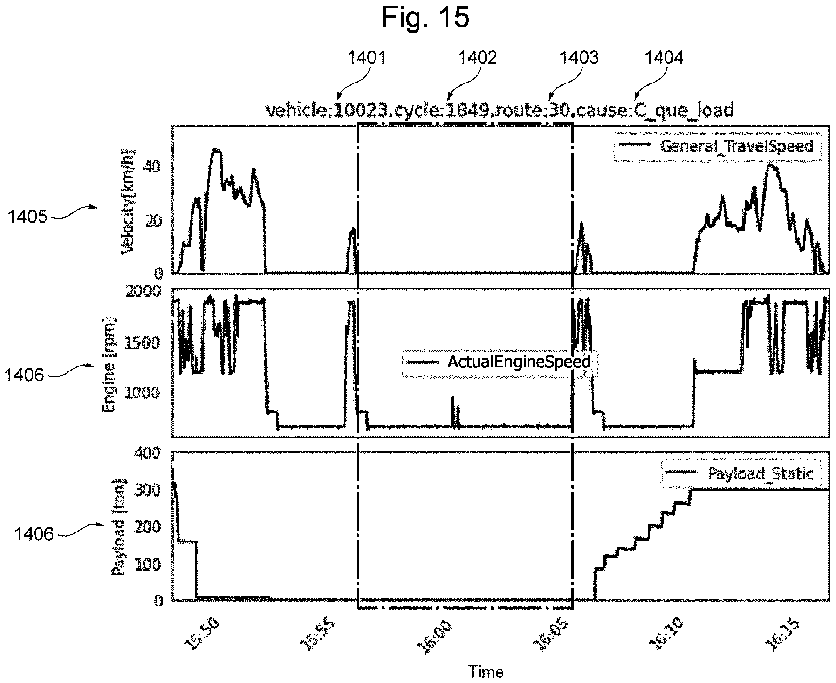

Fig. 15 is a chart of the working data in which the queuing load time falls out of a plan.

In the example of Fig. 15, as illustrated by the dot-dash line, it can be seen that waiting for loading occurs from time 15:56 to time 16:05. It is only necessary for the user of the terminal device 300 that displays Fig. 15 to analyze the working data of the dump truck 101 and the working data of the hydraulic excavator 102 in the middle of loading at this place and time. In this case, when the change over time of the dump truck 101 in the middle of loading is long, it is only necessary to provide guidance to the operator of the dump truck 101. When the loading time of the hydraulic excavator 102 in the middle of loading is long, it is only necessary to provide guidance to the operator of the hydraulic excavator 102. When waiting for loading frequently occurs at the same place, the dump truck 101 at work in the earth-dumping area may be notified of an adjustment of an operating interval or may be notified of a route of the area in order to review the operation plan and optimize vehicle allocation. This allows the mine management system 1 to improve the productivity.

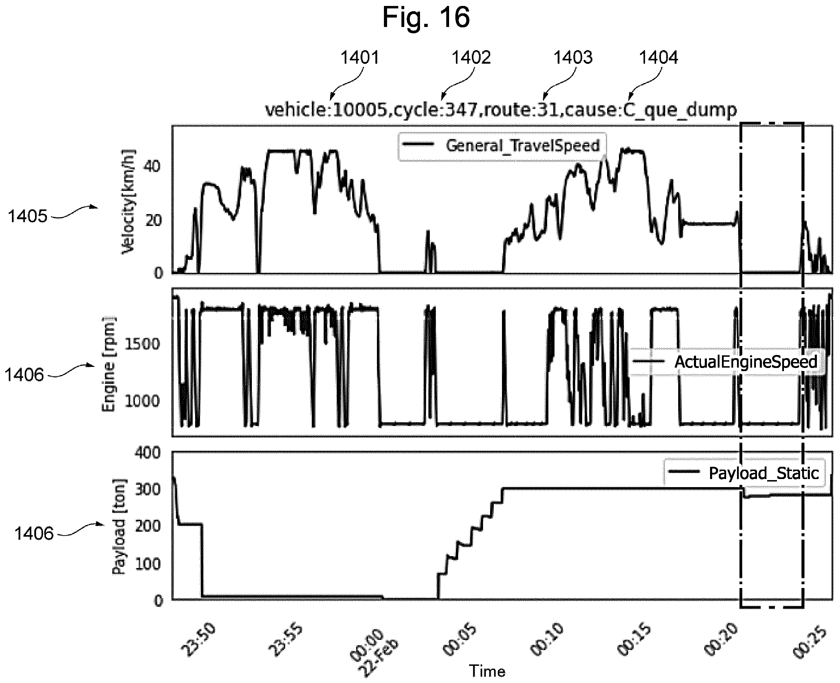

Fig. 16 is a chart of the working data in which the queuing dump time falls out of a plan.

**In** the example of Fig. 16, as illustrated by the dot-dash line, it can be seen that waiting for earth-dumping occurs from time 00:21 to time 00:24. It is only necessary for the user of the terminal device 300 that displays Fig. 16 to analyze the presence or absence of another dump truck 101 in the earth-dumping area and a layout of the earth-dumping area. It is only necessary to change the layout of the earth-dumping area or review the operation plan as appropriate. This allows the mine management system 1 to improve the productivity.

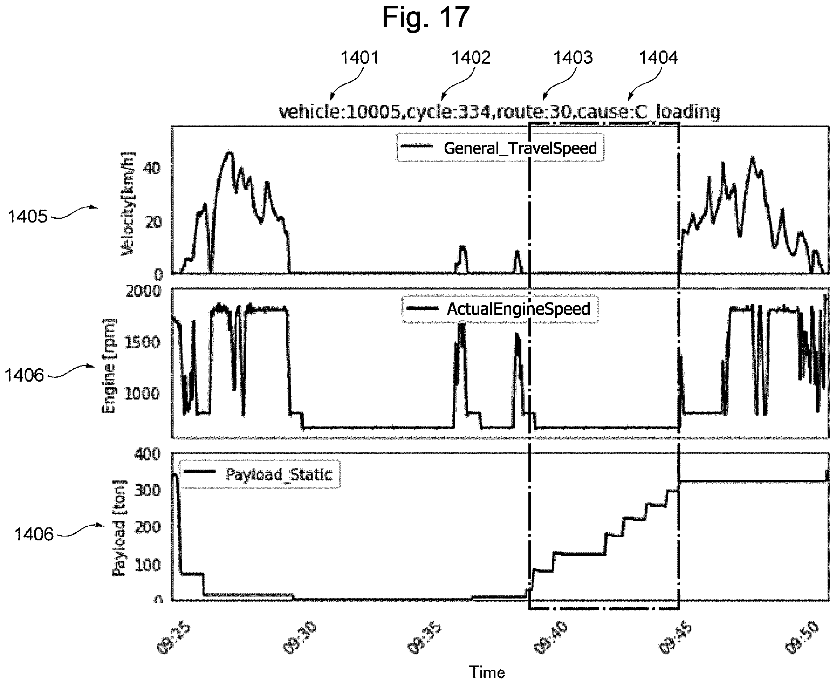

Fig. 17 is a chart of the working data in which the loading time falls out of a plan.

In the example of Fig. 17, as illustrated by the dot-dash line, it can be seen that loading from about time 9:40 takes time. It is only necessary for the user of the terminal device 300 that displays Fig. 17 to analyze the working data of the hydraulic excavator 102 in this time. When an alert of the hydraulic excavator 102 is present, it is only necessary to repair the hydraulic excavator 102. When moving and loading of the hydraulic excavator 102 take time, it is only necessary to provide guidance to the operator of the hydraulic excavator 102. Note that the display of the analysis results of "waiting time," "queuing load time," "queuing dump time," and "loading time" are not limited to being in a chart format. For example, the display may be performed on a map illustrating a working environment with positional history. In this case, since traveling history at any given time can be understood, it is possible to intuitively grasp from which point (position) the working data is when the out-of-plan factor indicator occurs, therefore allowing further analysis. This allows the mine management system 1 to improve the productivity.

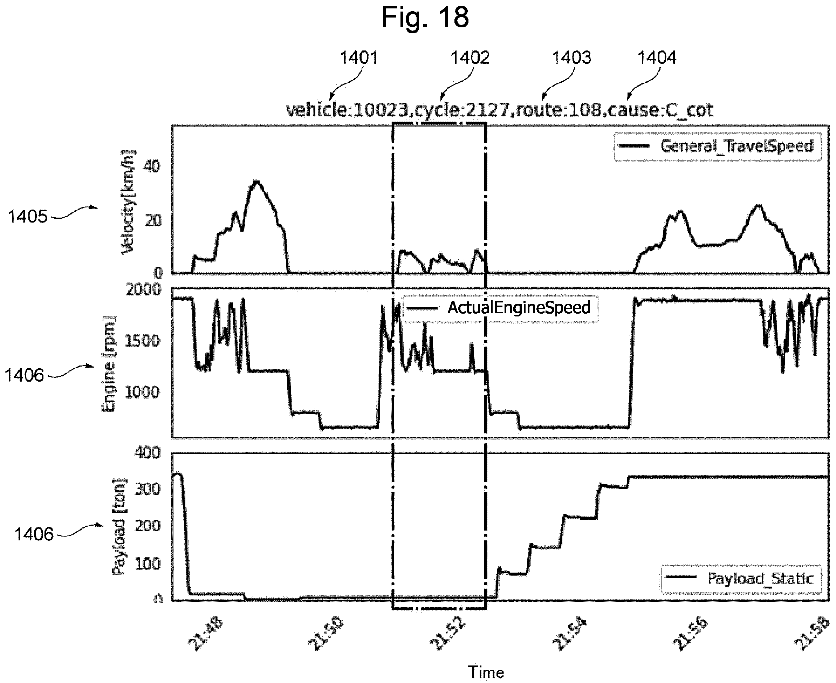

Fig. 18 is a chart of the working data in which the change over time falls out of a plan.

In the example of Fig. 18, as illustrated by the dot-dash line, it can be seen that traveling at a low speed repeats before loading from time 21:51 to time 21:53. It is only necessary for the user of the terminal device 300 that displays Fig. 18 to identify the cause by hearing about this situation from the operator of the dump truck 101. This allows the mine management system 1 to improve the productivity.

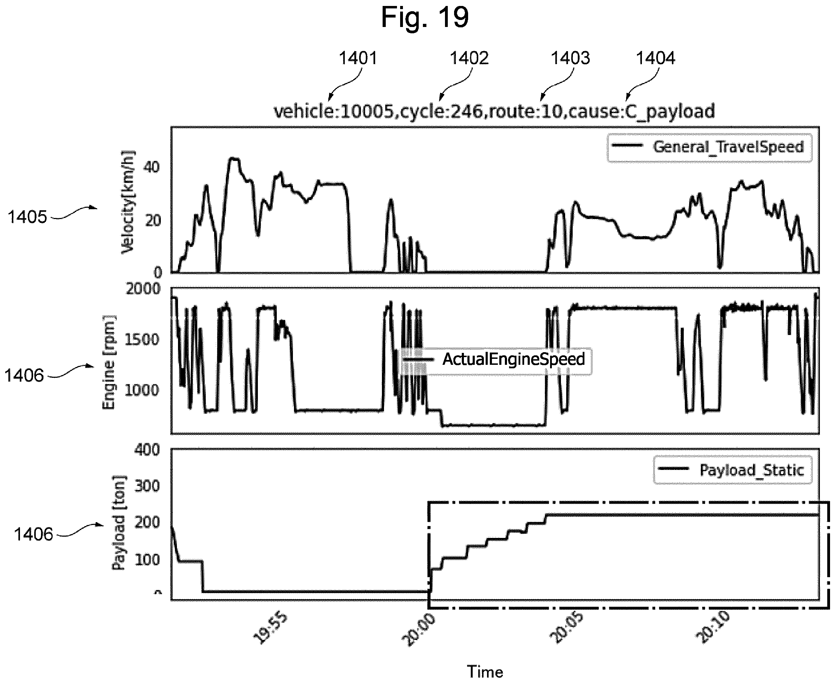

Fig. 19 is a chart of the working data in which the payload falls out of a plan.

In the example of Fig. 19, as illustrated by the dot-dash line, it can be seen that the payload by the loading from about time 20:00 is low. It is only necessary for the user of the terminal device 300 that displays Fig. 19 to identify the cause by analyzing the working data of the hydraulic excavator 102 that conducts this loading or hearing from the operator of the hydraulic excavator 102. This allows the mine management system 1 to improve the productivity.

Fig. 20 is a drawing illustrating another display example of the working data in which the queuing dump time falls out of a plan.

The place of the earth-dumping area and the time in which the queuing dump time falls out of a plan can be identified from the working data of the dump truck 101 in which the queuing dump time falls out of the plan. An earth-dumping position A in the earth-dumping area and a stop position B of the dump truck 101 can be computed from the positional data of the GPS sensor of the dump truck 101. The terminal device 300 can display the earth-dumping position A and the stop position B on a map or satellite photograph near the earth-dumping area in which the queuing dump time falls out of the plan. It is only necessary for the user of the terminal device 300 that displays Fig. 20 to analyze a positional relationship between the earth-dumping position A and the stop position B and a situation in the earth-dumping area. It is only necessary to change the layout of the earth-dumping area or review the operation plan as appropriate. This allows the mine management system 1 to improve the productivity.

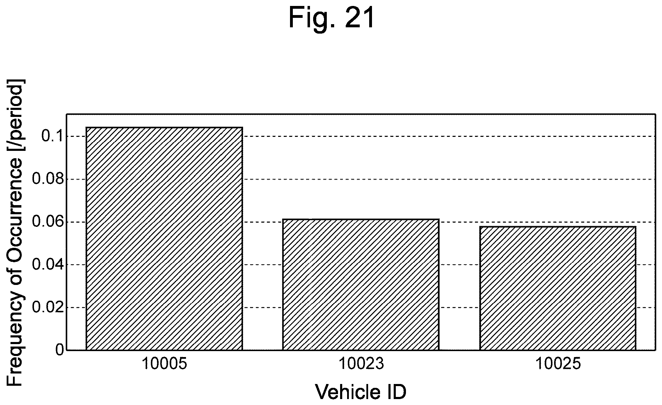

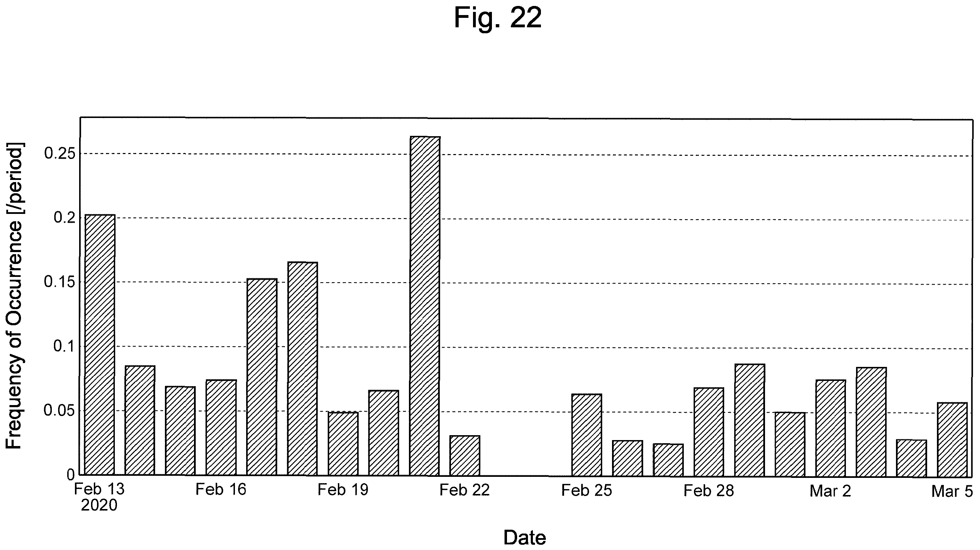

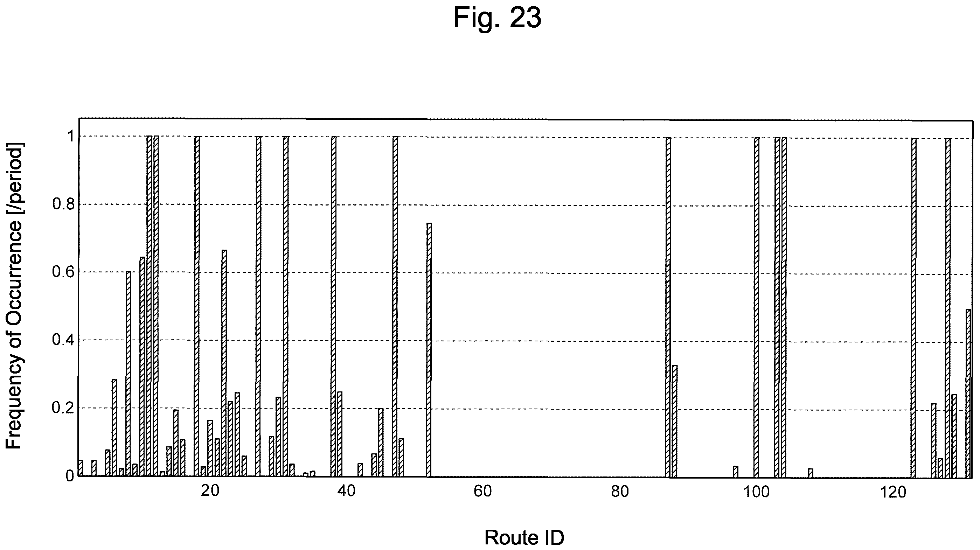

Fig. 21 is a drawing illustrating the result of totaling the frequency of occurrence of the out-of-plan working condition for each dump truck 101. Fig. 22 is a drawing illustrating the result of totaling the frequency of occurrence of the out-of-plan working condition illustrated in Fig. 21 for each date. Fig. 23 is a drawing illustrating the result of totaling the frequency of occurrence of the out-of-plan working condition illustrated in Fig. 21 for each route.

**In** the example of Fig. 21, it can be seen that there is a difference in the frequency of occurrence of the out-of-plan working condition according to the dump truck 101. In the example of Fig. 22, it can be seen that there is a difference in the frequency of occurrence of the out-of-plan working condition according to the date. In the example of Fig. 23, it can be seen that the routes on which the out-of-plan working condition inevitably occurs (routes with the frequency of occurrence of 1.0) exist. From these, it can be seen that particular routes have a problem. It is only necessary for the user of the terminal device 300 that displays Fig. 21 to Fig. 23 to analyze the working data on the dates with a high frequency of occurrence of the out-of-plan working condition is high on the particular routes and identify a cause. This allows the mine management system 1 to improve the productivity.

As described above, the mine management system 1 of Embodiment 1 is a system for managing the productivity of the mine 100 and includes the server device 200 that accumulates and processes working data of the mining machines 101 to 103 collected from the mining machines 101 to 103 and the determination device 250 that performs determination processing of determining whether or not a working condition of the mining machines 101 to 103 in which the productivity falls out of a plan has occurred based on the working data. The server device 200 has the extracting section 211, the indicator computing section 212, and the learning section 214. The extracting section 211 extracts cycle data as the working data for each work cycle of the mining machines 101 to 103, from the accumulated working data. The indicator computing section 212 computes a plurality of out-of-plan factor indicators representing occurrence factors of the working condition in which the productivity falls out of a plan in the cycle data. The learning section 214 uses the plurality of computed out-of-plan factor indicators to perform machine learning of allowing the determination device 250 to learn a relationship between the plurality of out-of-plan factor indicators that identify the cycle data in which the productivity falls within a plan. The determination device 250 performs determination processing by evaluating how much cycle data extracted from the accumulated working data deviates from the cycle data in which the productivity falls within the plan based on the preliminarily learned relationship between the plurality of out-of-plan factor indicators.

This allows the mine management system 1 of Embodiment 1 to accurately detect that the productivity falls out of a plan in connection with a plurality of factors by performing machine learning of the relationship between the plurality of out-of-plan factor indicators instead of handling the out-of-plan factor indicators alone. Moreover, the mine management system 1 of Embodiment 1 can accurately detect that the productivity falls out of a plan in various mines that have a plurality of routes or unknown routes by performing machine learning of the relationship between the plurality of out-of-plan factor indicators. Accordingly, since the mine management system 1 of Embodiment 1 can take appropriate measures to improve the productivity to fall within a plan, the productivity of the mine 100 can be improved.

Furthermore, in the mine management system 1 of Embodiment 1, the mining machines 101 to 103 are dump trucks 101. The plurality of out-of-plan factor indicators include at least two of the payload of the dump truck 101, the queuing dump time as a wait time of the dump truck 101 in the earth-dumping area of the mine 100, the queuing load time as a wait time of the dump truck 101 in the loading area of the mine 100, the waiting time of the dump truck 101 on the routes connecting between the loading area and the earth-dumping area, the loading time of a load to the dump truck 101, the change over time as a time required for the dump truck 101 to transition to ready for loading in the loading area, and the average speed of the dump truck 101.

That is, in the mine management system 1 of Embodiment 1, indicators representing actions or states that easily affect the productivity of the mine 100, which are distinctive actions or states in work areas or during work processes of the dump truck 101, are computed as the out-of-plan factor indicators of the dump truck 101. This allows the mine management system 1 of Embodiment 1 to accurately detect in which work area or during which work process an action or state causes the working condition of the dump truck 101 in which the productivity falls out of a plan to have occurred. Accordingly, since the mine management system 1 of Embodiment 1 can further take appropriate measures to improve the productivity to fall within a plan, the productivity of the mine 100 can be further improved.

Furthermore, in the mine management system 1 of Embodiment 1, the learning section 214 performs machine learning by clustering a plurality of cycle data in which the productivity falls within a plan. The determination device 250 computes a score represented according to distances between cycle data extracted from the accumulated working data and cluster centers and determines that the working condition in which the productivity falls out of the plan has occurred when the score is larger than a threshold.

This allows the mine management system 1 of Embodiment 1 to easily build a classification model that has learned the relationship between the plurality of out-of-plan factor indicators that identify the cycle data in which the productivity falls within a plan. Moreover, the mine management system 1 of Embodiment 1 determines whether or not the working condition in which the productivity falls out of a plan has occurred by quantitatively evaluating the cycle data using a unified evaluation value called a score. Therefore, the mine management system 1 of Embodiment 1 can further accurately and easily detect that the productivity falls out of a plan in various mines that have a plurality of routes or unknown routes. Accordingly, since the mine management system 1 of Embodiment 1 can further take appropriate measures to improve the productivity to fall within a plan, the productivity of the mine 100 can be further improved.

Furthermore, in the mine management system 1 of Embodiment 1, when the determination device 250 determines that the working condition in which the productivity falls out of a plan has occurred, the determination device 250 computes the level of contribution of each of the plurality of out-of-plan factor indicators to the score and identifies the out-of-plan factor indicator having the largest level of contribution as the occurrence factor.

This allows the mine management system 1 of Embodiment 1 to uniquely identify a main occurrence factor of the working condition in which the productivity falls out of a plan using a unified evaluation value called a score. Therefore, the mine management system 1 of Embodiment 1 can accurately detect the main factor that causes the productivity to fall out of a plan in various mines that have a plurality of routes or unknown routes. Accordingly, since the mine management system 1 of Embodiment 1 can further take appropriate measures to improve the productivity to fall within a plan, the productivity of the mine 100 can be further improved.

Furthermore, the mine management system 1 of Embodiment 1 further includes the terminal device 300 including the display 301. The server device 200 totals the frequency of occurrence of the working condition in which the productivity falls out of a plan, the frequency of appearance of the occurrence factors, or the scores for each period or for each of the mining machines 101 to 103 and transmits the totaled result to the terminal device 300. The terminal device 300 displays the totaled result on the display 301. At that time, based on an operation history of each operator, the out-of-plan factor indicators with a high frequency of occurrence (number of times) among the plurality of out-of-plan factor indicators may be notified so as to be able to identify a tendency in the operation, or the average number of times of the out-of-plan factor indicators between operators may be computed and the out-of-plan factor indicators exceeding the cumulative average number of times may be notified, thereby associating with an improvement instruction. In addition, when there is the operation history of the operators, points that should be improved, points that have been improved, or a combination thereof may be displayed.

This allows the mine management system 1 of Embodiment 1 to inform users of how the frequency of occurrence of the working condition in which the productivity falls out of a plan, the frequency of appearance of the occurrence factors, or the scores change for each period or for each of the mining machines 101 to 103 in a form that is intuitively and easily grasped. Therefore, according to the mine management system 1 of Embodiment 1, the users easily analyze the occurrence factors of the working condition in which the productivity falls out of a plan. Furthermore, the number of the mining machines 101 to 103 to be a target of the display is not limited to one machine and may be a plurality of machines, and not only a tendency specific to any one machine but also the overall tendency may be identified. Accordingly, since the mine management system 1 of Embodiment 1 can further take appropriate measures to improve the productivity to fall within a plan, the productivity of the mine 100 can be further improved.

Furthermore, in the mine management system 1 of Embodiment 1, the server device 200 acquires the working data of the mining machines 101 to 103 where the working condition in which the productivity falls out of a plan has occurred and transmits the acquired working data or a transition of the working data to the terminal device 300. The terminal device 300 displays the transition of the working data on the display 301.

As a result, according to the mine management system 1 of Embodiment 1, the users can analyze in detail the factors that cause the working condition in which the productivity falls out of a plan based on the working data of the mining machines 101 to 103. Accordingly, since the mine management system 1 of Embodiment 1 can further take appropriate measures to improve the productivity to fall within a plan, the productivity of the mine 100 can be further improved.

Furthermore, in the mine management system 1 of Embodiment 1, the plurality of out-of-plan factor indicators are preliminarily associated with information of entities that affect the fluctuations of the out-of-plan factor indicators. The terminal device 300 displays on the display 301 a message to a concerned party of the entity indicated by the information associated with the out-of-plan factor indicator representing the occurrence factor identified by the determination device 250. The message may be displayed by displaying a simulation of a model operation or in a form of a comparison between a current occurrence situation with a graph, chart, or score.

This allows the mine management system 1 of Embodiment 1 to assign a concerned party of the entity associated with the out-of-plan factor indicator representing the occurrence factor identified by the determination device 250 to a person in charge of measures to improve the productivity to fall within a plan. The mine management system 1 of Embodiment 1 can notify the person in charge of measures of a message, such as an improvement instruction to the person in charge of measures, by displaying the message on the display 301 of the terminal device 300 of the person in charge of measures. Obviously, the message, such as an improvement instruction, may be a direct notification to an operator. In this case, the message is not limited to a text format, but includes audio or viewable identification display, such as flags of different colors. In addition, the interval between notifications can be set arbitrarily at regular intervals, such as every half day or every other day, depending on the cumulative frequency of occurrence and the degree of urgency and importance. For example, in a case where the interval is set to be every hour, every three hours, and the like based on the chronological order described above, by setting the time for totaling in the morning and finishing identifying the out-of-plan factor indicators with a high frequency of occurrence, the effect of leading to improvement in the afternoon can be expected. Accordingly, since the mine management system 1 of Embodiment 1 allows the person in charge of measures to promptly take measures to improve the productivity to fall within a plan, the productivity of the mine 100 can be promptly improved.

### [Embodiment 2]

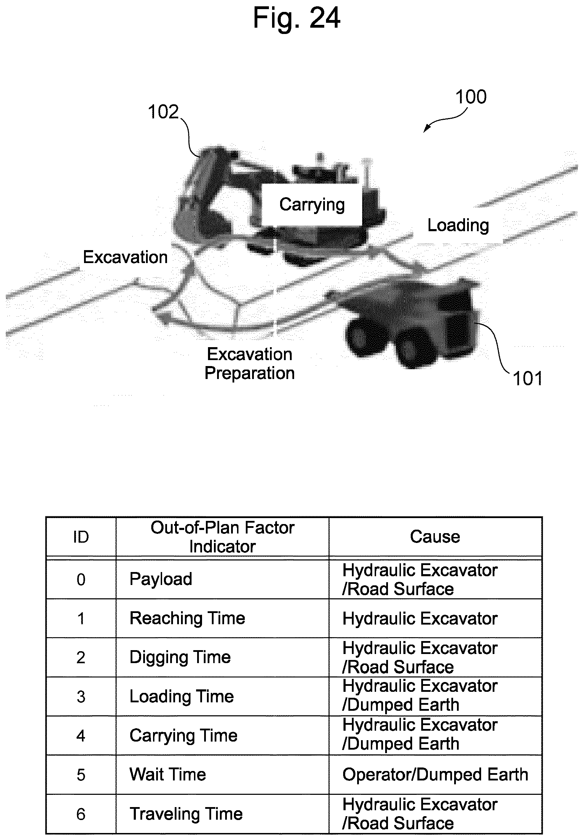

Using Fig. 24, the mine management system 1 of Embodiment 2 will be described. In the mine management system 1 of Embodiment 2, the descriptions for the configuration and actions similar to those of Embodiment 1 are omitted.

In Embodiment 2, the mine management system 1 that detects that the productivity of the mine 100 falls out of a plan from the working data of the hydraulic excavator 102, which is one of the mining machines 101 to 103, will be described as an example.

Fig. 24 is a drawing describing the work cycle and the out-of-plan factor indicators of the hydraulic excavator 102 applied in the mine management system 1 of Embodiment 2.

The hydraulic excavator 102 performs a series of actions in one work cycle of loading excavated earth, sand, and the like as a load onto the dump truck 101, preparing excavation after loading, followed by excavating earth, sand, and the like, and carrying the excavated earth, sand, and the like from an excavated surface onto a vessel of the dump truck 101. In the work cycle, loading onto the dump truck 101 need not be defined as a starting point, and another action, such as excavation action, may be defined as the starting point.

In one work cycle of the hydraulic excavator 102, items that affect the productivity of the mine 100 include a payload of the hydraulic excavator 102, a reaching time as a time required for the hydraulic excavator 102 after loading to prepare for performing a next excavation, a digging time of the hydraulic excavator 102, a carrying time as a time required for the hydraulic excavator 102 to carry the excavated load to the dump truck 101 as a machine to be loaded, a loading time as a time required for the hydraulic excavator 102 to load the carried load onto the dump truck 101 as a machine to be loaded, a waiting time of the hydraulic excavator 102, and a traveling time of the hydraulic excavator 102. In Embodiment 2, as illustrated in the table of Fig. 24, these items are defined as the out-of-plan factor indicators of the hydraulic excavator 102.

Note that the payload of the hydraulic excavator 102 can be computed from each angle of a boom, an arm, and a bucket and each cylinder pressure of the hydraulic excavator 102. Alternatively, as the payload of the hydraulic excavator 102, a payload computed from the suspension pressure of the dump truck 101 can be received from the dump truck 101. The reaching time, the digging time, the loading time, the carrying time, the wait time, and the traveling time can be computed from each angle of the boom, the arm, and the bucket and each cylinder pressure of the hydraulic excavator 102, a revolving angle of an upper swing structure, a traveling speed of an undercarriage, and the like.

Similarly to Embodiment 1, the out-of-plan factor indicators of the hydraulic excavator 102 are preliminarily associated with IDs that identify the respective indicators and information on entities that affect the fluctuations of the respective indicators. Similarly to Embodiment 1, the determination device 250 uses the out-of-plan factor indicators to evaluate the working data of the hydraulic excavator 102 and identify an occurrence factor of the working condition of the hydraulic excavator 102 in which the productivity falls out of a plan. Similarly to Embodiment 1, the processing device 202 can transmit, to the terminal device 300 of each of the concerned parties of the entities associated with the out-of-plan factor indicator representing the occurrence factor of the out-of-plan working condition, a message, such as an improvement instruction corresponding to the occurrence factor. Similarly to Embodiment 1, the terminal device 300 can display the message on the display 301 to notify each of the concerned parties. Note that it is only necessary for the mine management system 1 to employ at least two of the indicators illustrated in the table of Fig. 24 as the out-of-plan factor indicators of the hydraulic excavator 102.

The mine management system 1 of Embodiment 2 computes indicators representing actions or states that easily affect the productivity of the mine 100, which are distinctive actions or states during work processes of the hydraulic excavator 102, as the out-of-plan factor indicators of the hydraulic excavator 102. This allows the mine management system 1 of Embodiment 2 to accurately detect during which work process an action or state causes the working condition of the hydraulic excavator 102 in which the productivity falls out of a plan to have occurred. Accordingly, since the mine management system 1 of Embodiment 2 can take appropriate measures to improve the productivity to fall within the plan even when the working condition of the hydraulic excavator 102 in which the productivity falls out of a plan occurs, the productivity of the mine 100 can be improved.

### [Others]

The present invention is not limited to the embodiments described above but includes various modifications. For example, the above-described embodiments are explained in detail for easy understanding of the description of the present invention and are not necessarily limited to one that includes all the explained configurations. A part of the configuration in one embodiment can be replaced by a configuration in another embodiment, and the configuration in another embodiment can be added to the configuration in one embodiment. For a part of the configuration of each of the embodiments, another configuration can be added, deleted, or replaced.

The above-described respective configurations, functions, processing sections, processing means, or the like may be realized by hardware, for example, an integrated circuit in which a part of or all of them may be designed. The above-described respective configurations, functions, and the like may be realized by software whose programs realizing the respective functions are interpreted and executed by a processor. The programs that realize the respective functions, tables, and information, such as files, can be placed in a memory, a storage unit, such as a hard disk and a solid state drive (SSD), or a storing medium, such as an IC card, an SD card, and a DVD.

In addition, control lines and information lines considered necessary for the description are described, and not all the control lines or the information lines for the product are necessarily described. In fact, almost all configurations can be considered to be interconnected.

### Reference Signs List

- 1: Mine management system
- 100: Mine
- 101: Dump truck
- 102: Hydraulic excavator
- 101 to 103: Mining machine
- 200: Server device
- 211: Extracting section
- 212: Indicator computing section
- 214: Learning section
- 250: Determination device
- 300: Terminal device
- 301: Display

## Claims

1. A mine management system (1) for managing productivity of a mine, comprising:
a server device (200) configured to accumulate and process working data of a mining machine (101 - 103) collected from the mining machine (101 - 103); and
a determination device (250) configured to perform determination processing of determining whether or not a working condition of the mining machine (101 - 103) in which the productivity falls out of a plan has occurred, based on the working data,
wherein the server device (200) includes:
an extracting section (211) configured to extract cycle data as the working data for each work cycle of the mining machine (101 - 103), from the accumulated working data;
a computing section (212) configured to compute a plurality of indicators representing an occurrence factor of the working condition in which the productivity falls out of a plan, in the cycle data; and
a learning section (214) configured to use the plurality of computed indicators to perform machine learning of allowing the determination device (250) to learn a relationship between the plurality of indicators that identify the cycle data in which the productivity falls within a plan, and
wherein the determination device (250) is configured to perform the determination processing based on the relationship between the plurality of indicators learned by the learning section (214),
**characterized in that** the learning section (214) is configured to perform the machine learning by clustering a plurality of the cycle data in which the productivity falls within a plan, and
wherein the determination device (250) is configured to compute a score represented according to a distance between the cycle data extracted from the accumulated working data and a cluster center and to determine that the working condition in which the productivity falls out of a plan has occurred when the score is larger than a threshold.

2. The mine management system (1) according to claim 1,
wherein the mining machine (101 - 103) is a dump truck (101), and
wherein the plurality of indicators include at least two of a payload of the dump truck (101), a queuing dump time as a wait time of the dump truck (101) in an earth-dumping area of the mine, a queuing load time as a wait time of the dump truck (101) in a loading area of the mine, a waiting time of the dump truck (101) on a route connecting between the loading area and the earth-dumping area, a loading time of a load to the dump truck (101), a change over time as a time required for the dump truck (101) to transition to ready for loading in the loading area, and an average speed of the dump truck (101).

3. The mine management system (1) according to claim 1,
wherein the mining machine (101 - 103) is a hydraulic excavator (102), and
wherein the plurality of indicators include at least two of a payload of the hydraulic excavator (102), a reaching time as a time required for the hydraulic excavator (102) after loading to prepare for performing a next excavation, a digging time of the hydraulic excavator (102), a carrying time as a time required for the hydraulic excavator (102) to carry an excavated load to a machine to be loaded, a loading time as a time required for the hydraulic excavator (102) to load a carried load onto a machine to be loaded, a wait time of the hydraulic excavator (102), and a traveling time of the hydraulic excavator (102).

4. The mine management system (1) according to claim 1,
wherein the determination device (250) is configured to compute, when the determination device (250) has determined that the working condition in which the productivity falls out of a plan has occurred, a level of contribution of each of the plurality of indicators to the score and to identify the indicator having a largest one of the levels of contribution as the occurrence factor.

5. The mine management system (1) according to claim 4, further comprising
a terminal device including a display,
wherein the server device (200) is configured to total a frequency of occurrence of the working condition in which the productivity falls out of a plan, a frequency of appearance of the occurrence factor, or the score for each period or for each of the mining machine (101 - 103) and to transmit a totaled result to the terminal device, and
wherein the terminal device is configured to display the totaled result on the display.

6. The mine management system (1) according to claim 5, further comprising:
a terminal device including a display,
wherein the server device (200) is configured to acquire the working data of the mining machine (101 - 103) where the working condition in which the productivity falls out of a plan has occurred and to transmit the acquired working data or a transition of the working data to the terminal device, and
wherein the terminal device is configured to display the transition of the working data on the display.

7. The mine management system (1) according to claim 4, further comprising:
a terminal device including a display,
wherein the plurality of indicators are preliminarily associated with information of an entity that affects a fluctuation of the indicators, and
wherein the terminal device is configured to display on the display a message to a concerned party of the entity indicated by the information associated with the indicator representing the occurrence factor identified by the determination device (250).

## Patentansprüche

1. Minenverwaltungssystem (1) zum Verwalten der Produktivität einer Mine, umfassend:
eine Server-Einrichtung (200), die ausgestaltet ist, um Arbeitsdaten einer Bergbaumaschine (101 - 103), die von der Bergbaumaschine (101 - 103) erfasst werden, zu sammeln und zu verarbeiten; und
eine Ermittlungseinrichtung (250), die ausgestaltet ist, um eine Ermittlungsverarbeitung zum Ermitteln, ob ein Arbeitszustand der Bergbaumaschine (101 - 103), in dem die Produktivität aus einem Plan fällt, aufgetreten ist oder nicht, basierend auf den Arbeitsdaten durchzuführen,
wobei die Server-Einrichtung (200) umfasst:
einen Extraktionsabschnitt (211), der ausgestaltet ist, um Zyklusdaten als die Arbeitsdaten für jeden Arbeitszyklus der Bergbaumaschine (101 - 103) aus den gesammelten Arbeitsdaten zu extrahieren;
einen Berechnungsabschnitt (212), der ausgestaltet ist, um eine Vielzahl von Indikatoren, die einen Faktor eines Auftretens des Arbeitszustands, in dem die Produktivität aus einem Plan fällt, darstellen, in den Zyklusdaten zu berechnen; und
einen Lernabschnitt (214), der ausgestaltet ist, um die Vielzahl von berechneten Indikatoren zu verwenden, um ein maschinelles Lernen durchzuführen, um der Ermittlungseinrichtung (250) zu ermöglichen, eine Beziehung zwischen der Vielzahl von Indikatoren zu lernen, die die Zyklusdaten, in denen die Produktivität in einen Plan fällt, identifizieren, und
wobei die Ermittlungseinrichtung (250) ausgestaltet ist, um die Ermittlungsverarbeitung basierend auf der Beziehung zwischen der Vielzahl von Indikatoren, die durch den Lernabschnitt (214) gelernt werden, durchzuführen,
**dadurch gekennzeichnet, dass**
der Lernabschnitt (214) ausgestaltet ist, um das maschinelle Lernen durch Clustern einer Vielzahl der Zyklusdaten, in denen die Produktivität in einen Plan fällt, durchzuführen, und
wobei die Ermittlungseinrichtung (250) ausgestaltet ist, um einen Punktwert zu berechnen, der gemäß einem Abstand zwischen den Zyklusdaten, die aus den gesammelten Arbeitsdaten extrahiert werden, und einem Cluster-Zentrum dargestellt wird, und um zu ermitteln, dass der Arbeitszustand, in dem die Produktivität aus einem Plan fällt, aufgetreten ist, wenn der Punktwert größer als ein Schwellenwert ist.

2. Minenverwaltungssystem (1) nach Anspruch 1,
wobei die Bergbaumaschine (101 - 103) ein Muldenkipper (101) ist, und wobei die Vielzahl von Indikatoren zumindest zwei von einem Ladegewicht des Muldenkippers (101), einer Warteschlangen-Abladezeitdauer als eine Wartezeitdauer des Muldenkippers (101) in einem Erdabladebereich der Mine, einer Warteschlangen-Beladezeitdauer als eine Wartezeitdauer des Muldenkippers (101) in einem Beladebereich der Mine, einer Wartezeitdauer des Muldenkippers (101) auf einer Route, die eine Verbindung zwischen dem Beladebereich und dem Erdabladebereich herstellt, einer Beladezeitdauer einer Ladung für den Muldenkipper (101), einer Änderung über die Zeit als eine Zeitdauer, die erforderlich ist, damit der Muldenkipper (101) in dem Beladebereich in eine Ladebereitschaft übergeht, und einer Durchschnittsgeschwindigkeit des Muldenkippers (101) umfasst.

3. Minenverwaltungssystem (1) nach Anspruch 1,
wobei die Bergbaumaschine (101 - 103) ein Hydraulikbagger (102) ist, und
wobei die Vielzahl von Indikatoren zumindest zwei von einem Ladegewicht des Hydraulikbaggers (102), einer Ankunftszeitdauer als eine Zeitdauer, die erforderlich ist, damit sich der Hydraulikbagger (102) nach einem Beladen vorbereitet, um einen nächsten Aushub durchzuführen, einer Baggerzeitdauer des Hydraulikbaggers (102), einer Beförderungszeitdauer als eine Zeitdauer, die erforderlich ist, damit der Hydraulikbagger (102) eine ausgehobene Ladung auf eine zu beladende Maschine befördert, einer Beladezeitdauer als eine Zeitdauer, die erforderlich ist, damit der Hydraulikbagger (102) eine beförderte Ladung auf eine zu beladende Maschine lädt, einer Wartezeitdauer des Hydraulikbaggers (102) und einer Fahrzeitdauer des Hydraulikbaggers (102) umfasst.

4. Minenverwaltungssystem (1) nach Anspruch 1,
wobei die Ermittlungseinrichtung (250) ausgestaltet ist, um, wenn die Ermittlungseinrichtung (250) ermittelt hat, dass der Arbeitszustand, in dem die Produktivität aus einem Plan fällt, aufgetreten ist, ein Beitragsniveau von jedem der Vielzahl von Indikatoren zu dem Punktwert zu berechnen und um den Indikator mit einem größten der Beitragsniveaus als den Faktor eines Auftretens zu identifizieren.

5. Minenverwaltungssystem (1) nach Anspruch 4, ferner umfassend eine Endgeräteinrichtung, die eine Anzeige umfasst,
wobei die Server-Einrichtung (200) ausgestaltet ist, um eine Häufigkeit eines Auftretens des Arbeitszustands, in dem die Produktivität aus einem Plan fällt, eine Häufigkeit eines Vorkommens des Faktors eines Auftretens oder den Punktwert für jeden Zeitraum oder für jede der Bergbaumaschinen (101 - 103) zu summieren und um ein summiertes Ergebnis an die Endgeräteinrichtung zu übertragen, und
wobei die Endgeräteinrichtung ausgestaltet ist, um das summierte Ergebnis an der Anzeige anzuzeigen.

6. Minenverwaltungssystem (1) nach Anspruch 5, ferner umfassend:
eine Endgeräteinrichtung, die eine Anzeige umfasst,
wobei die Server-Einrichtung (200) ausgestaltet ist, um die Arbeitsdaten der Bergbaumaschine (101 - 103) zu erlangen, wenn der Arbeitszustand, in dem die Produktivität aus einem Plan fällt, aufgetreten ist, und um die erlangten Arbeitsdaten oder eine Veränderung der Arbeitsdaten an die Endgeräteinrichtung zu übertragen, und
wobei die Endgeräteinrichtung ausgestaltet ist, um die Veränderung der Arbeitsdaten an der Anzeige anzuzeigen.

7. Minenverwaltungssystem (1) nach Anspruch 4, ferner umfassend:
eine Endgeräteinrichtung, die eine Anzeige umfasst,
wobei die Vielzahl von Indikatoren vorübergehend mit einer Information einer Entität in Verbindung steht, die eine Schwankung der Indikatoren beeinflusst, und
wobei die Endgeräteinrichtung ausgestaltet ist, um an der Anzeige eine Nachricht für eine betroffene Partei der Entität anzuzeigen, die durch die Information angegeben wird, die mit dem Indikator in Verbindung steht, der den durch die Ermittlungseinrichtung (250) identifizierten Faktor eines Auftretens darstellt.

## Revendications

1. Système de gestion de mine (1) destiné à gérer une productivité d'une mine, comprenant :
un dispositif serveur (200) configuré pour accumuler et traiter des données de travail d'une machine d'exploitation minière (101 - 103) collectées à partir de la machine d'exploitation minière (101 - 103) ; et
un dispositif de détermination (250) configuré pour effectuer un traitement de détermination consistant à déterminer si une condition de travail de la machine d'exploitation minière (101 -103) dans laquelle la productivité tombe en dehors d'un plan est oui ou non survenue, sur la base des données de travail,
dans lequel le dispositif serveur (2) inclut :
une section d'extraction (211) configurée pour extraire des données de cycle à titre de données de travail pour chaque cycle de travail de la machine d'exploitation minière (101 - 103), à partir des données de travail accumulées ;
une section de calcul (212) configurée pour calculer une pluralité d'indicateurs représentant un facteur d'occurrence de la condition de travail dans laquelle la productivité tombe en dehors d'un plan, dans les données de cycle ; et
une section d'apprentissage (214) configurée pour utiliser la pluralité d'indicateurs calculés pour effectuer un apprentissage automatique consistant à permettre au dispositif de détermination (250) d'apprendre une relation entre la pluralité d'indicateurs qui identifient les données de cycle dans laquelle la productivité tombe en dehors d'un plan, et
dans lequel le dispositif de détermination (250) est configuré pour effectuer le traitement de détermination sur la base de la relation entre la pluralité d'indicateurs appris par la section d'apprentissage (214),
**caractérisé en ce que**
la section d'apprentissage (214) est configurée pour effectuer l'apprentissage automatique en regroupant une pluralité de données de cycle dans lesquelles la productivité tombe à l'intérieur d'un plan, et
dans lequel le dispositif de détermination (250) est configuré pour calculer un score représenté en fonction d'une distance entre les données de cycle extraites à partir des données de travail accumulées et un centre de cluster et pour déterminer que la condition de travail dans laquelle la productivité tombe en dehors d'un plan est survenue, quand le score est plus élevé qu'un seuil.

2. Système de gestion de mine (1) selon la revendication 1,
dans lequel la machine d'exploitation minière (101 - 103) est un camion-benne (101), et
dans lequel la pluralité d'indicateurs inclut au moins deux éléments parmi les suivants : une charge utile du camion-benne (101), un temps de déversement de file d'attente à titre de temps d'attente du camion-benne (101) dans une zone de déversement de terre de l'exploitation minière, un temps de charge de file d'attente à titre de temps d'attente du camion-benne (101) dans une zone de chargement de l'exploitation minière, un temps d'attente du camion-benne (101) sur un itinéraire connectant la zone de chargement et la zone de déversement de terre, un temps de chargement d'une charge sur le camion-benne (101), un temps de basculement à titre de temps requis pour que le camion-benne (101) passe à l'état prêt au chargement dans la zone de chargement, et une vitesse moyenne du camion-benne (101).

3. Système de gestion de mine (1) selon la revendication 1,
dans lequel la machine d'exploitation minière (101 - 103) est un excavateur hydraulique (102), et
dans lequel la pluralité d'indicateurs inclut au moins deux éléments parmi les suivants : une charge utile de l'excavateur hydraulique (102), un temps d'atteinte à titre de temps requis pour que l'excavateur hydraulique (102), après chargement, prépare l'exécution d'une prochaine excavation, un temps de creusement de l'excavateur hydraulique (102), un temps de transport à titre de temps requis pour que l'excavateur hydraulique (102) transporte une charge excavée jusqu'à une machine devant être chargée, un temps de chargement à titre de temps requis pour que l'excavateur hydraulique (102) charge une charge transportée jusque sur une machine devant être chargée, un temps d'attente de l'excavateur hydraulique (102), et un temps de déplacement de l'excavateur hydraulique (102).

4. Système de gestion de mine (1) selon la revendication 1,
dans lequel le dispositif de détermination (250) est configuré pour calculer, quand le dispositif de détermination (250) a déterminé que la condition de travail dans laquelle la productivité tombe en dehors d'un plan est survenue, un niveau de contribution de chacun de la pluralité d'indicateurs au score, et pour identifier l'indicateur ayant un niveau le plus élevé des niveaux de contribution à titre de facteur d'occurrence.

5. Système de gestion de mine (1) selon la revendication 4, comprenant en outre
un dispositif terminal incluant un affichage,
dans lequel le dispositif serveur (200) est configuré pour totaliser une fréquence d'occurrence de la condition de travail dans laquelle la productivité tombe en dehors d'un plan, une fréquence d'apparition du facteur d'occurrence, où le score pour chaque période ou pour chaque machine d'exploitation minière (101 - 103), et pour transmettre un résultat totalisé au dispositif terminal, et
dans lequel le dispositif terminal est configuré pour afficher le résultat totalisé sur l'affichage.

6. Système de gestion de mine (1) selon la revendication 15, comprenant en outre :
un dispositif terminal incluant un affichage,
dans lequel le dispositif serveur (200) est configuré pour acquérir les données de travail de la machine d'exploitation minière (101 - 103) lorsque la condition de travail dans laquelle la productivité tombe en dehors d'un plan est survenue, et pour transmettre les données de travail acquises ou un passage des données de travail au dispositif terminal, et
dans lequel le dispositif terminal est configuré pour afficher le passage des données de travail sur l'affichage.

7. Système de gestion de mine (1) selon la revendication 4, comprenant en outre :
un dispositif terminal incluant un affichage,
dans lequel la pluralité d'indicateurs sont associés au préalable à des informations d'une entité qui affecte une fluctuation des indicateurs, et
dans lequel le dispositif terminal est configuré pour afficher sur l'affichage un message à une partie concernée de l'entité indiquée par les informations associées à l'indicateur représentant le facteur d'occurrence identifié par le dispositif de détermination (250).
